# EUROPEAN PATENT APPLICATION

(11) **EP 4 425 865 A1**
(43) Date of publication of application: **04.09.2024**
(21) Application number: 22885213.3
(22) Date of filing: 19.07.2022
(51) Int. Cl.: H04L 41/083

(54) **DATA TRANSMISSION METHOD, APPARATUS AND SYSTEM, AND DEVICE AND READABLE STORAGE MEDIUM**

(30) Priority: 30.10.2021 CN 202111278595
(71) Applicant: Huawei Technologies Co., Ltd., Shenzhen, Guangdong 518129 (CN)
(72) Inventor: HE, Xiang, Shenzhen, Guangdong 518129 (CN); WANG, Xinyuan, Shenzhen, Guangdong 518129 (CN); REN, Hao, Shenzhen, Guangdong 518129 (CN)
(74) Representative: Huawei European IPR
(86) International application number: PCT/CN2022/106516
(87) International publication number: WO 2023/071309

(57) **Abstract**

This application discloses a data transmission method, apparatus, device, and system, and a readable storage medium. The data transmission method includes: A first module obtains at least one channel of first data encoded based on first FEC; converts the at least one channel of first data to obtain at least one channel of second data, where a sum of rates of the at least one channel of second data is not less than a sum of rates of the at least one channel of first data; and transmits the obtained at least one channel of second data. In the method, the at least one channel of first data is converted to obtain the at least one channel of second data whose sum of rates is not less than the sum of rates of the at least one channel of first data, so that data transmission can be performed at a high rate.

## Description

This application claims priority to Chinese Patent Application No. 202111278595.3, filed with the China National Intellectual Property Administration on October 30, 2021 and entitled "DATA TRANSMISSION METHOD, APPARATUS, DEVICE, AND SYSTEM, AND READABLE STORAGE MEDIUM", which is incorporated herein by reference in its entirety.

### TECHNICAL FIELD

Embodiments of this application relate to the field of communication technologies, and in particular, to a data transmission method, apparatus, device, and system, and a readable storage medium.

### BACKGROUND

As demands for data transmission continuously increase, there is a higher requirement on transmission rates. For example, in a scenario that requires low-latency transmission, such as a data center, data transmission needs to be performed at a high transmission rate. Therefore, a data transmission method is urgently needed to implement a high transmission rate.

### SUMMARY

This application provides a data transmission method, apparatus, device, and system, and a readable storage medium, to improve a data transmission rate.

According to a first aspect, a data transmission method is provided. The method includes: A first module obtains at least one channel of first data encoded based on a first forward error correction FEC code; converts the at least one channel of first data to obtain at least one channel of second data, where a sum of rates of the at least one channel of second data is not less than a sum of rates of the at least one channel of first data; and transmits the obtained at least one channel of second data.

In the method, the at least one channel of first data is converted to obtain the at least one channel of second data whose sum of rates is not less than the sum of rates of the at least one channel of first data, so that data transmission can be performed at a high rate.

In a possible implementation, that the first module converts the at least one channel of first data to obtain at least one channel of second data includes: The first module aligns the at least one channel of first data, and obtains a plurality of first codewords based on an alignment result; and decodes the plurality of first codewords, and obtains the at least one channel of second data based on a decoding result.

In a possible implementation, the obtaining the at least one channel of second data based on a decoding result includes: encoding the decoding result based on a second FEC code, to obtain a plurality of second codewords; and obtaining the at least one channel of second data based on the plurality of second codewords. For decoding results obtained based on different first data, the first module may encode the decoding results by using a same second FEC code or different second FEC codes, to flexibly apply to a transmission scenario and a transmission requirement.

In a possible implementation, the obtaining at least one channel of second data based on the plurality of second codewords includes: interleaving the plurality of second codewords, and obtaining the at least one channel of second data based on an interleaving result.

In a possible implementation, the first data includes an alignment marker AM, and the AM is used to align the at least one channel of first data; and the encoding the decoding result based on a second FEC code, to obtain a plurality of second codewords includes: deleting the AM in the decoding result, and encoding, based on the second FEC code, a decoding result obtained by deleting the AM, to obtain the plurality of second codewords.

In a possible implementation, the encoding, based on the second FEC code, a decoding result obtained by deleting the AM, to obtain the plurality of second codewords includes: combining, in a sequential sending manner, the decoding result obtained by deleting the AM into one channel of third data, and encoding the one channel of third data, to obtain the plurality of second codewords; or converting the decoding result obtained by deleting the AM into at least two channels of third data, and encoding the at least two channels of third data, to obtain the plurality of second codewords.

In a possible implementation, the converting the decoding result obtained by deleting the AM into at least two channels of third data includes: combining the decoding result obtained by deleting the AM into one channel of fourth data, and converting the one channel of fourth data into the at least two channels of third data.

In a possible implementation, the encoding the one channel of third data to obtain the plurality of second codewords includes: performing overall encoding on the one channel of third data based on the second FEC code, to obtain the plurality of second codewords; or converting the one channel of third data into at least two channels of fifth data, and separately encoding the at least two channels of fifth data based on the second FEC code, to obtain the plurality of second codewords. A rate of the fifth data is less than a rate of the third data. In the method, the third data can be encoded in different manners, to obtain the plurality of second codewords. Therefore, a transmission scenario and a transmission requirement to which the method is applicable are flexible. In addition, when a quantity of channels of third data is a plurality of channels, the quantity of channels of third data and the second FEC code used for encoding the third data may be flexibly set, to apply to different transmission scenarios and transmission requirements.

In a possible implementation, the encoding the at least two channels of third data to obtain the plurality of second codewords includes: performing overall encoding on the at least two channels of third data based on the second FEC code, to obtain the plurality of second codewords; or separately encoding the at least two channels of third data based on the second FEC code, to obtain the plurality of second codewords.

In a possible implementation, the separately encoding the at least two channels of third data based on the second FEC code, to obtain the plurality of second codewords includes: separately performing overall encoding on the at least two channels of third data based on the second FEC code, to obtain the plurality of second codewords; or converting each of the at least two channels of third data into at least two channels of sixth data, and separately encoding the at least two channels of sixth data based on the second FEC code, to obtain the plurality of second codewords. A rate of the sixth data is less than a rate of the third data.

In a possible implementation, the obtaining the at least one channel of second data based on a decoding result includes: marking an error code block in a plurality of code blocks included in the decoding result, and obtaining the at least one channel of second data based on a marked decoding result. Because the first module can mark the error code block in the decoding result, when subsequently receiving second data obtained based on the decoding result, a receiving side module can perform, based on the marked error code block, effective error correction on the data, to improve error correction performance and improve data transmission quality.

In a possible implementation, that the first module converts the at least one channel of first data to obtain at least one channel of second data includes: The first module aligns the at least one channel of first data, and obtains a plurality of first codewords based on an alignment result; and obtains the at least one channel of second data based on the plurality of first codewords.

In a possible implementation, the obtaining the at least one channel of second data based on the plurality of first codewords includes: combining the plurality of first codewords, and obtaining the at least one channel of second data based on a combination result.

In a possible implementation, the combining the plurality of first codewords, and obtaining the at least one channel of second data based on a combination result includes: combining the plurality of first codewords into one channel of second data in a sequential sending manner; or combining the plurality of first codewords into at least two channels of second data.

In a possible implementation, the at least one channel of first data is data obtained through interleaving, and the obtaining a plurality of first codewords based on an alignment result includes: de-interleaving the alignment result, and obtaining the plurality of first codewords based on a de-interleaving result.

In a possible implementation, that the first module converts the at least one channel of first data to obtain at least one channel of second data includes: The first module encodes the at least one channel of first data based on a second FEC code, to obtain a plurality of third codewords; and the first module obtains the at least one channel of second data based on the plurality of third codewords. Because the first module may re-encode, by using the second FEC code, the obtained first data encoded based on the first FEC code, and the second data has a higher encoding gain, when transmission of the second data is performed on a channel on which a bit error easily occurs, effective error correction can be performed on data in which a bit error occurs, to improve data transmission quality.

In a possible implementation, the obtaining the at least one channel of second data based on the plurality of third codewords includes: interleaving the plurality of third codewords, and obtaining the at least one channel of second data based on an interleaving result.

In a possible implementation, that the first module encodes the at least one channel of first data based on a second FEC code, to obtain a plurality of third codewords includes: combining the at least one channel of first data into one channel of seventh data in a sequential sending manner, and encoding the one channel of seventh data, to obtain the plurality of third codewords; or converting the at least one channel of first data into at least two channels of seventh data, and encoding the at least two channels of seventh data, to obtain the plurality of third codewords. In the method, the seventh data can be encoded in different manners, to obtain the plurality of third codewords. Therefore, the transmission scenario and the transmission requirement to which the method is applicable are flexible. In addition, when a quantity of channels of seventh data is a plurality of channels, the quantity of channels of seventh data and the second FEC code used for encoding the seventh data may be flexibly set, to apply to different transmission scenarios and transmission requirements.

In a possible implementation, the converting the at least one channel of first data into at least two channels of seventh data includes: combining the at least one channel of first data into one channel of eighth data, and converting the one channel of eighth data into the at least two channels of seventh data.

In a possible implementation, the encoding the one channel of seventh data, to obtain the plurality of third codewords includes: performing overall encoding on the one channel of seventh data based on the second FEC code, to obtain the plurality of third codewords; or converting the one channel of seventh data into at least two channels of ninth data, and separately encoding the at least two channels of ninth data based on the second FEC code, to obtain the plurality of third codewords. A rate of the ninth data is less than a rate of the seventh data.

In a possible implementation, the encoding the at least two channels of seventh data, to obtain the plurality of third codewords includes: performing overall encoding on the at least two channels of seventh data based on the second FEC code, to obtain the plurality of third codewords; or separately encoding the at least two channels of seventh data based on the second FEC code, to obtain the plurality of third codewords.

In a possible implementation, the separately encoding the at least two channels of seventh data based on the second FEC code, to obtain the plurality of third codewords includes: separately performing overall encoding on the at least two channels of seventh data based on the second FEC code, to obtain the plurality of third codewords; or converting each of the at least two channels of seventh data into at least two channels of tenth data, and separately encoding the at least two channels of tenth data based on the second FEC code, to obtain the plurality of third codewords. A rate of the tenth data is less than a rate of the seventh data.

In a possible implementation, that the first module transmits the at least one channel of second data includes: The first module inserts synchronization data into the at least one channel of second data, and transmits data obtained by inserting the synchronization data.

In a possible implementation, that the first module inserts synchronization data into the at least one channel of second data includes: determining an AM corresponding to each channel of second data in the at least one channel of second data; and inserting the AM corresponding to each channel of second data as synchronization data into each channel of second data.

In a possible implementation, the AM corresponding to each channel of second data is obtained by adjusting an AM included in corresponding first data; the AM corresponding to each channel of second data is all content of an AM included in corresponding first data; or the AM corresponding to each channel of second data is partial content of an AM included in corresponding first data.

According to a second aspect, a data transmission method is provided. The method includes: A third module obtains at least one channel of second data. The at least one channel of second data is data obtained by converting at least one channel of first data, a sum of rates of the at least one channel of second data is not less than a sum of rates of the at least one channel of first data, and the first data is data encoded based on a first forward error correction FEC code. The third module converts the at least one channel of second data to obtain the at least one channel of first data.

According to a third aspect, a data transmission apparatus is provided. The apparatus is used in a first module, and the apparatus includes:
an obtaining unit, configured to obtain at least one channel of first data, where the first data is data encoded based on a first forward error correction FEC code;
a conversion unit, configured to convert the at least one channel of first data to obtain at least one channel of second data, where a sum of rates of the at least one channel of second data is not less than a sum of rates of the at least one channel of first data; and
a transmission unit, configured to transmit the at least one channel of second data.

In a possible implementation, the conversion unit is configured to: align the at least one channel of first data, and obtain a plurality of first codewords based on an alignment result; and decode the plurality of first codewords, and obtain the at least one channel of second data based on a decoding result.

In a possible implementation, the conversion unit is configured to: encode the decoding result based on a second FEC code, to obtain a plurality of second codewords; and obtain the at least one channel of second data based on the plurality of second codewords.

In a possible implementation, the conversion unit is configured to: interleave the plurality of second codewords, and obtain the at least one channel of second data based on an interleaving result.

In a possible implementation, the first data includes an alignment marker AM, and the AM is used to align the at least one channel of first data. The conversion unit is configured to: delete the AM in the decoding result, and encode, based on the second FEC code, a decoding result obtained by deleting the AM, to obtain the plurality of second codewords.

In a possible implementation, the conversion unit is configured to: combine, in a sequential sending manner, the decoding result obtained by deleting the AM into one channel of third data, and encode the one channel of third data, to obtain the plurality of second codewords; or convert the decoding result obtained by deleting the AM into at least two channels of third data, and encode the at least two channels of third data, to obtain the plurality of second codewords.

In a possible implementation, the conversion unit is configured to: combine the decoding result obtained by deleting the AM into one channel of fourth data, and convert the one channel of fourth data into the at least two channels of third data.

In a possible implementation, the conversion unit is configured to: perform overall encoding on the one channel of third data based on the second FEC code, to obtain the plurality of second codewords; or convert the one channel of third data into at least two channels of fifth data, and separately encode the at least two channels of fifth data based on the second FEC code, to obtain the plurality of second codewords. A rate of the fifth data is less than a rate of the third data.

In a possible implementation, the conversion unit is configured to: perform overall encoding on the at least two channels of third data based on the second FEC code, to obtain the plurality of second codewords; or separately encode the at least two channels of third data based on the second FEC code, to obtain the plurality of second codewords.

In a possible implementation, the conversion unit is configured to: separately perform overall encoding on the at least two channels of third data based on the second FEC code, to obtain the plurality of second codewords; or convert each of the at least two channels of third data into at least two channels of sixth data, and separately encode the at least two channels of sixth data based on the second FEC code, to obtain the plurality of second codewords. A rate of the sixth data is less than a rate of the third data.

In a possible implementation, the conversion unit is configured to: mark an error code block in a plurality of code blocks included in the decoding result, and obtain the at least one channel of second data based on a marked decoding result.

In a possible implementation, the conversion unit is configured to: align the at least one channel of first data, and obtain a plurality of first codewords based on an alignment result; and obtain the at least one channel of second data based on the plurality of first codewords.

In a possible implementation, the conversion unit is configured to: combine the plurality of first codewords, and obtain the at least one channel of second data based on a combination result.

In a possible implementation, the conversion unit is configured to: combine the plurality of first codewords into one channel of second data in a sequential sending manner; or combine the plurality of first codewords into at least two channels of second data.

In a possible implementation, the conversion unit is configured to: de-interleave the alignment result, and obtain the plurality of first codewords based on a de-interleaving result.

In a possible implementation, the conversion unit is configured to: encode the at least one channel of first data based on a second FEC code, to obtain a plurality of third codewords; and obtain the at least one channel of second data based on the plurality of third codewords.

In a possible implementation, the conversion unit is configured to: interleave the plurality of third codewords, and obtain the at least one channel of second data based on an interleaving result.

In a possible implementation, the conversion unit is configured to: combine the at least one channel of first data into one channel of seventh data in a sequential sending manner, and encode the one channel of seventh data, to obtain the plurality of third codewords; or convert the at least one channel of first data into at least two channels of seventh data, and encode the at least two channels of seventh data, to obtain the plurality of third codewords.

In a possible implementation, the conversion unit is configured to: combine the at least one channel of first data into one channel of eighth data, and convert the one channel of eighth data into the at least two channels of seventh data.

In a possible implementation, the conversion unit is configured to: perform overall encoding on the one channel of seventh data based on the second FEC code, to obtain the plurality of third codewords; or convert the one channel of seventh data into at least two channels of ninth data, and separately encode the at least two channels of ninth data based on the second FEC code, to obtain the plurality of third codewords. A rate of the ninth data is less than a rate of the seventh data.

In a possible implementation, the conversion unit is configured to: perform overall encoding on the at least two channels of seventh data based on the second FEC code, to obtain the plurality of third codewords; or separately encode the at least two channels of seventh data based on the second FEC code, to obtain the plurality of third codewords.

In a possible implementation, the conversion unit is configured to: separately perform overall encoding on the at least two channels of seventh data based on the second FEC code, to obtain the plurality of third codewords; or convert each of the at least two channels of seventh data into at least two channels of tenth data, and separately encode the at least two channels of tenth data based on the second FEC code, to obtain the plurality of third codewords. A rate of the tenth data is less than a rate of the seventh data.

In a possible implementation, the transmission unit is configured to: insert synchronization data into the at least one channel of second data, and transmit data obtained by inserting the synchronization data.

In a possible implementation, the transmission unit is configured to: determine an AM corresponding to each channel of second data in the at least one channel of second data; and insert the AM corresponding to each channel of second data as synchronization data into each channel of second data.

In a possible implementation, the AM corresponding to each channel of second data is obtained by adjusting an AM included in corresponding first data; the AM corresponding to each channel of second data is all content of an AM included in corresponding first data; or the AM corresponding to each channel of second data is partial content of an AM included in corresponding first data.

According to a fourth aspect, a data transmission apparatus is provided. The apparatus is used in a third module, and the apparatus includes:
an obtaining unit, configured to obtain at least one channel of second data, where the at least one channel of second data is data obtained by converting at least one channel of first data, a sum of rates of the at least one channel of second data is not less than a sum of rates of the at least one channel of first data, and the first data is data encoded based on a first forward error correction FEC code; and
a conversion unit, configured to convert the at least one channel of second data to obtain the at least one channel of first data.

According to a fifth aspect, a data transmission device is provided. The device includes a processor. The processor is coupled to a memory, the memory stores at least one program instruction or code, and the at least one program instruction or code is loaded and executed by the processor, to enable the device to implement the data transmission method according to either the first aspect or the second aspect.

According to a sixth aspect, a data transmission system is provided. The system includes: a first data transmission device, configured to perform the method according to either the first aspect or the first aspect; and a second data transmission device, configured to perform the method according to either the second aspect or the second aspect.

According to a seventh aspect, a computer-readable storage medium is provided. The computer-readable storage medium stores at least one program instruction or code, and when the program instruction or code is loaded and executed by a processor, a computer is enabled to implement the data transmission method according to either the first aspect or the second aspect.

Another communication apparatus is provided. The apparatus includes a communication interface, a memory, and a processor. The memory and the processor communicate with each other through an internal connection channel. The memory is configured to store instructions. The processor is configured to execute the instructions stored in the memory, to control the communication interface to receive data and control the communication interface to send data. In addition, when the processor executes the instructions stored in the memory, the processor is enabled to perform the method according to any one of the first aspect or the possible implementations of the first aspect, or perform the method according to any one of the second aspect or the possible implementations of the second aspect.

For example, there are one or more processors, and there are one or more memories.

For example, the memory and the processor may be integrated together, or the memory and the processor are disposed separately.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

A computer program (product) is provided. The computer program (product) includes computer program code. When the computer program code is run on a computer, the computer is enabled to perform the methods in the foregoing aspects.

A chip is provided. The chip includes a processor, configured to: invoke, from a memory, instructions stored in the memory and run the instructions, to enable a device on which the chip is installed to perform the methods in the foregoing aspects.

Another chip is provided. The chip includes an input interface, an output interface, a processor, and a memory. The input interface, the output interface, the processor, and the memory are connected to each other through an internal connection channel. The processor is configured to execute code in the memory. When the code is executed, the processor is configured to perform the methods in the foregoing aspects.

A device is provided. The device includes the chip in any one of the foregoing solutions.

A device is provided. The device includes the first module in any one of the foregoing solutions, and/or the third module in any one of the foregoing solutions.

It should be understood that, for beneficial effects achieved by the technical solutions in the third aspect to the seventh aspect and the corresponding possible implementations in embodiments of this application, refer to the foregoing technical effects in the first aspect, the second aspect, and the corresponding possible implementations. Details are not described herein again.

### BRIEF DESCRIPTION OF DRAWINGS

FIG. 1 is a schematic diagram of an implementation scenario of a data transmission method according to an embodiment of this application;
FIG. 2 is a flowchart of a data transmission method according to an embodiment of this application;
FIG. 3 is a schematic diagram of first data and second data according to an embodiment of this application;
FIG. 4 is another schematic diagram of first data and second data according to an embodiment of this application;
FIG. 5 is a schematic diagram of a process of obtaining at least one channel of second data according to an embodiment of this application;
FIG. 6 is a schematic diagram of another process of obtaining at least one channel of second data according to an embodiment of this application;
FIG. 7 is a schematic diagram of a process of marking an error code block according to an embodiment of this application;
FIG. 8 is a schematic diagram of another process of marking an error code block according to an embodiment of this application;
FIG. 9 is a schematic diagram of another process of marking an error code block according to an embodiment of this application;
FIG. 10 is a schematic diagram of another process of marking an error code block according to an embodiment of this application;
FIG. 11 is a schematic diagram of a process of combining into third data according to an embodiment of this application;
FIG. 12 is another schematic diagram of first data and second data according to an embodiment of this application;
FIG. 13 is another schematic diagram of first data and second data according to an embodiment of this application;
FIG. 14 is a schematic diagram of an implementation environment of an application scenario according to an embodiment of this application;
FIG. 15 is a schematic diagram of an implementation environment of another application scenario according to an embodiment of this application;
FIG. 16 is a schematic diagram of an implementation environment of another application scenario according to an embodiment of this application;
FIG. 17 is a schematic diagram of an implementation environment of another application scenario according to an embodiment of this application;
FIG. 18 is a flowchart of another data transmission method according to an embodiment of this application;
FIG. 19 is a schematic diagram of a structure of a data transmission apparatus according to an embodiment of this application;
FIG. 20 is a schematic diagram of a structure of another data transmission apparatus according to an embodiment of this application; and
FIG. 21 is a schematic diagram of a structure of another data transmission device according to an embodiment of this application.

### DESCRIPTION OF EMBODIMENTS

Terms used in implementations of this application are only used to explain embodiments of this application, and are not intended to limit this application. The following describes embodiments of this application with reference to accompanying drawings.

In the field of communication technologies, as demands for data transmission continuously increase, there is a higher requirement on transmission rates, and gradually, it is difficult for current transmission rates to meet the requirement. For example, in a scenario that requires low-latency transmission, such as a data center, gradually, it is difficult for 200 gigabit Ethernet (gigabit Ethernet, GE)/400 GE to meet a latency requirement, and a higher transmission rate is needed for data transmission, for example, 800 GE/1.6 terabit Ethernet (terabit Ethernet, TE).

In this case, embodiments of this application provide a data transmission method. In the method, at least one channel of first data is converted to obtain at least one channel of second data. A sum of rates of the at least one channel of second data is not less than a sum of rates of the at least one channel of first data. In this way, data transmission can be performed at a high rate. The method provided in embodiments of this application is applicable to any forward error correction (forward error correction, FEC) architecture of an end-to-end (end-to-end) FEC architecture, a segment-by-segment (segment-by-segment) architecture, and a concatenated (concatenated) FEC architecture. In addition, for the segment-by-segment FEC architecture and the concatenated FEC architecture, a current module may be reused in the method in embodiments of this application, to reduce overheads of an optical fiber, a module, and a component.

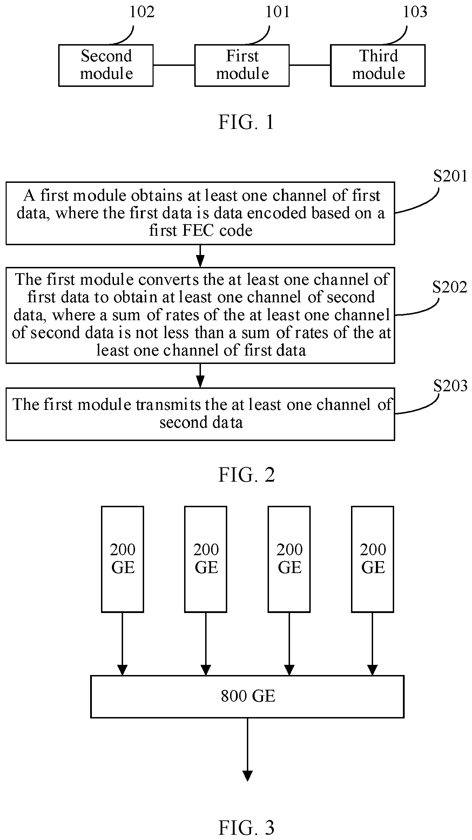

FIG. 1 shows an implementation scenario of a data transmission method according to an embodiment of this application. The implementation scenario includes a plurality of modules, and the modules can exchange information with each other, to implement data transmission. As shown in FIG. 1, data transmission may be performed between a first module 101 and a second module 102, and between the first module 101 and a third module 103. It should be noted that the implementation scenario shown in FIG. 1 may include N modules, where N is a positive integer greater than or equal to 2. In FIG. 1, only an example in which a quantity of modules is 3 is used for description. In addition, the modules may be located in a same chip, or may be located in different chips.

With reference to the implementation scenario shown in FIG. 1, the data transmission method provided in embodiments of this application is shown in FIG. 2, and includes but is not limited to S201 to S203.

S201: A first module obtains at least one channel of first data, where the first data is data encoded based on a first FEC code.

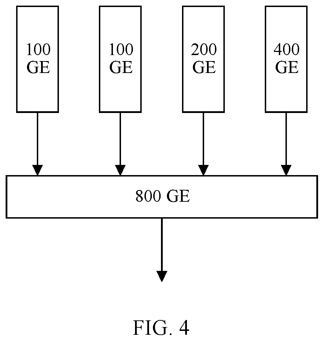

A rate of the first data is not limited in this embodiment of this application. In some embodiments, the rate of the first data is any one of 50 gigabits per second (gigabit per second, Gb/s), 100 Gb/s, 200 Gb/s, 400 Gb/s, 800 Gb/s, 1.6 terabits per second (terabit per second, Tb/s), 3.2 Tb/s, 6.4 Tb/s, or another non-standard rate. For example, when there are a plurality of channels of first data, rates of the plurality of channels of first data may be the same or different. For example, as shown in FIG. 3, the first module obtains four channels of first data, and rates of the four channels of first data are all 200 GE. For another example, as shown in FIG. 4, the first module obtains four channels of first data, and rates of the four channels of first data are respectively 100 GE, 100 GE, 200 GE, and 400 GE.

In addition, the at least one channel of first data is data encoded based on a same first FEC code or different first FEC codes. The first FEC code is not limited in this embodiment of this application. For example, the first FEC code is any one of a Reed-Solomon (Reed-Solomon, RS) code, a Bose-Chaudhuri-Hocquenghem (Bose-Chaudhuri-Hocquenghem, BCH) code, a fire (fire) code, a turbo (turbo) code, a turbo product code (turbo product code, TPC), a staircase (staircase) code, or a low-density parity-check (low-density parity-check, LDPC) code.

A manner in which the first module obtains the at least one channel of first data is not limited in this embodiment of this application. For example, the first module and the second module can perform data transmission, and the first module receives the at least one channel of first data sent by the second module. For example, the first module is located in a first chip, the second module is located in a second chip, and that the first module receives the at least one channel of first data sent by the second module includes but is not limited to: The first module receives the first data that is sent by the second module through a channel of an attachment unit interface (attachment unit interface, AUI).

In addition to the encoding using the first FEC code, other processing may be further performed on the first data. A processing manner of the other processing performed on the first data in addition to the encoding using the first FEC code is not limited in this embodiment of this application. For example, the first data is data that is encoded based on the first FEC code and that is distributed by using a physical medium attachment sublayer (physical medium attachment sublayer, PMA), the first data is data that is encoded based on the first FEC code and on which interleaving processing and PMA distribution are performed, or the like.

S202: The first module converts the at least one channel of first data to obtain at least one channel of second data, where a sum of rates of the at least one channel of second data is not less than a sum of rates of the at least one channel of first data.

A rate of the second data is not limited in this embodiment of this application. To transmit data at a higher rate, the sum of rates of the second data after the conversion is not less than the sum of rates of the first data before the conversion. In other words, the sum of rates of all the first data before the conversion is not greater than the sum of rates of all the second data after the conversion. In some embodiments, the rate of the second data is any one of 400 Gb/s, 800 Gb/s, 1.6 Tb/s, 3.2 Tb/s, 6.4 Tb/s, or another non-standard rate. For example, when there are a plurality of channels of second data, rates of the plurality of channels of second data may be the same or different.

For example, that the first module converts the at least one channel of first data to obtain at least one channel of second data includes but is not limited to the following three cases.

Case 1: For a segment-by-segment FEC architecture, that the first module converts the at least one channel of first data to obtain at least one channel of second data includes: The first module aligns the at least one channel of first data, and obtains a plurality of first codewords based on an alignment result; and decodes the plurality of first codewords, and obtains the at least one channel of second data based on a decoding result.

For example, that the first module aligns the at least one channel of first data includes but is not limited to separately aligning the at least one channel of first data. For example, the first module converts each of the at least one channel of first data into at least one channel of first sub-data, and aligns at least one channel of first sub-data belonging to the same channel of first data.

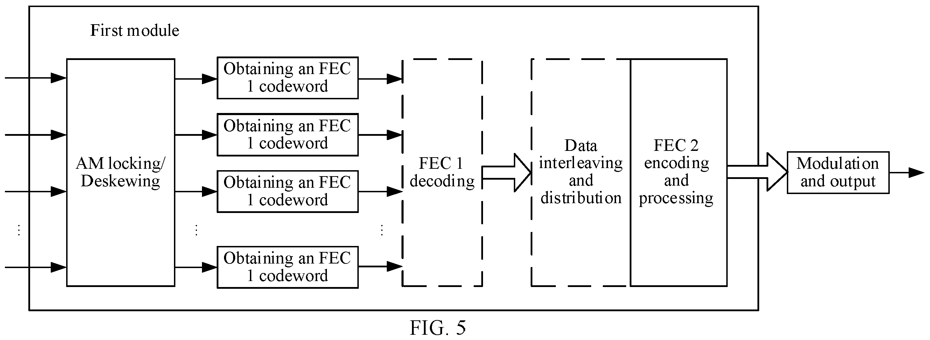

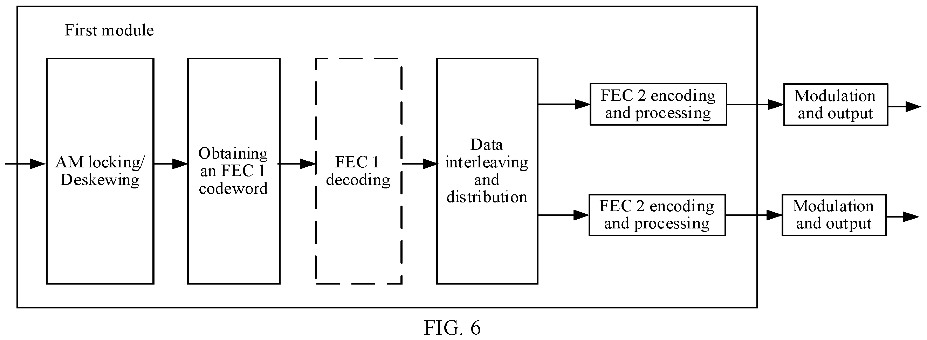

In some embodiments, the first data includes an alignment marker (alignment marker, AM), and the AM is used to align the at least one channel of first data. For example, for a case in which the first data includes the AM, aligning the at least one channel of first data includes but is not limited to AM locking and deskewing. The AM locking is used to search for a codeword boundary, to be specific, align the at least one channel of first data. After the codeword boundary is found, the deskewing may be performed in a manner defined in a standard, for example, each version or a future version of the Institute of Electrical and Electronics Engineers (Institute of Electrical and Electronics Engineers, IEEE) 802.3, to obtain the plurality of first codewords. In some embodiments, that the first module aligns the at least one channel of first data includes: The first module converts the at least one channel of first data into the at least one channel of first sub-data, and performs AM locking and deskewing on the at least one channel of first sub-data. For example, for aligning the at least one channel of first data, refer to AM locking/deskewing steps shown in FIG. 5 and FIG. 6.

For example, an alignment result of aligning the at least one channel of first data includes at least one first codeword sequence, and one first codeword sequence corresponds to one channel of first data. For example, when the at least one channel of first data is data that is not interleaved, obtaining the plurality of first codewords based on the alignment result includes but is not limited to: for each first codeword sequence in the at least one first codeword sequence, obtaining the plurality of first codewords based on an interval of a code length. For example, when the at least one channel of first data is interleaved data, obtaining the plurality of first codewords based on the alignment result includes but is not limited to performing de-interleaving (de-interleaving) on the alignment result, and obtaining the plurality of first codewords based on a de-interleaving result. For example, de-interleaving is performed on each first codeword sequence in the at least one first codeword sequence, and the plurality of first codewords are obtained based on a de-interleaving result. An interleaving manner of the at least one channel of first data is not limited in this application. For example, the interleaving manner of the at least one channel of first data includes but is not limited to at least one of codeword interleaving or inter-lane (lane) interleaving. When de-interleaving is performed on the alignment result, corresponding de-interleaving is performed according to the interleaving manner of the at least one channel of first data. For example, for steps of obtaining the plurality of first codewords, refer to steps of obtaining an FEC 1 (the first FEC code) codeword shown in FIG. 5 and FIG. 6.

After obtaining the plurality of first codewords, the first module decodes the plurality of first codewords to obtain the decoding result. For example, FEC 1 decoding steps are shown in FIG. 5 and FIG. 6. In some embodiments, decoding the plurality of first codewords to obtain the decoding result includes but is not limited to decoding the plurality of first codewords, and discarding check bits of the plurality of first codewords, to obtain the decoding result. In other words, the decoding result may include information bits of the plurality of first codewords and does not include the check bits of the plurality of first codewords. For example, when decoding the plurality of first codewords, the first module decodes the plurality of first codewords based on the first FEC code.

In some embodiments, obtaining the at least one channel of second data based on the decoding result includes but is not limited to S1-1 and S 1-2.

S1-1: Encode the decoding result based on a second FEC code, to obtain a plurality of second codewords.

The second FEC code is not limited in this embodiment of this application. For example, the second FEC code is any one of an RS code, a BCH code, a fire code, a turbo code, a turbo product code, a staircase code, or an LDPC code. For example, when the decoding result includes a decoding result obtained separately based on each channel of first data, and the decoding result is encoded based on the second FEC code, decoding results obtained based on different first data may be encoded based on a same second FEC code or different second FEC codes. This is not limited in this embodiment of this application.

In some embodiments, when the first data includes the AM, encoding the decoding result based on the second FEC code, to obtain the plurality of second codewords includes: deleting the AM in the decoding result, and encoding, based on the second FEC code, a decoding result obtained by deleting the AM, to obtain the plurality of second codewords. A manner of deleting the AM in the decoding result is not limited in this embodiment of this application. For example, when a codeword boundary is obtained through AM locking, a location of the AM is obtained, so that the AM may be deleted based on the location of the AM.

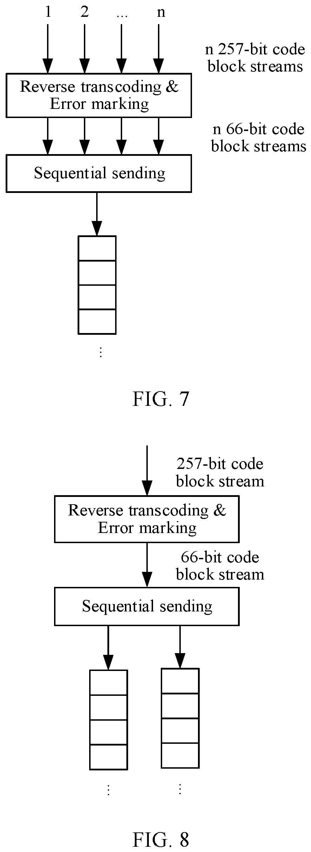

In some embodiments, obtaining the at least one channel of second data based on the decoding result includes: marking an error code block in a plurality of code blocks included in the decoding result, and obtaining the at least one channel of second data based on the marked decoding result. In a possible implementation, the plurality of code blocks included in the decoding result are reversely transcoded, an error code block in the plurality of code blocks obtained through reverse transcoding is marked, and the at least one channel of second data is obtained based on the plurality of code blocks marked with the error code block. For example, as shown in FIG. 7 and FIG. 8, the decoding result includes n 257-bit (bit) code block streams. The plurality of 257-bit (bit) code block streams are reversely transcoded to obtain n 66-bit code block streams, an error code block in the n 66-bit code block streams is marked, and the at least one channel of second data is obtained based on the n 66-bit code block streams marked with the error code block.

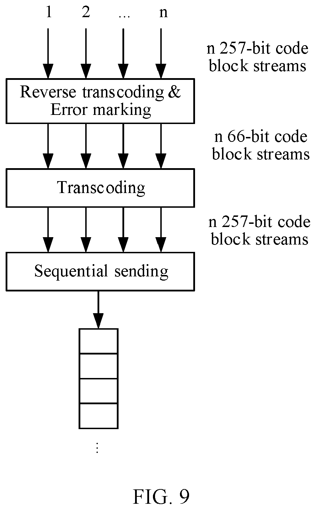

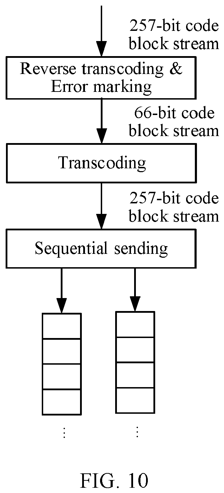

In another possible implementation, the plurality of code blocks included in the decoding result are reversely transcoded, an error code block in a plurality of code blocks obtained through reverse transcoding is marked, the plurality of code blocks marked with the error code block are transcoded, and the at least one channel of second data is obtained based on a plurality of code blocks that are obtained through transcoding. For example, as shown in FIG. 9 and FIG. 10, the decoding result includes n 257-bit (bit) code block streams. The n 257-bit (bit) code block streams are reversely transcoded to obtain n 66-bit code block streams, an error code block in the n 66-bit code block streams is marked, the n 66-bit code block streams marked with the error code block are transcoded to obtain n 257-bit code block streams, and the at least one channel of second data is obtained based on the n 257-bit code block streams.

Optionally, an operation of marking the error code block may be performed based on the decoding result obtained by deleting the AM. To be specific, after the AM in the decoding result is deleted, an error code block in the decoding result that is obtained by deleting the AM is marked, and the at least one channel of second data is obtained based on a decoding result that is obtained by deleting the AM and that is marked with the error code block. The error code block is marked to cope with error code caused by AUI transmission, system noise, and the like.

For example, encoding, based on the second FEC code, the decoding result obtained by deleting the AM, to obtain the plurality of second codewords includes but is not limited to the following two manners.

Manner 1 of obtaining the plurality of second codewords: The decoding result obtained by deleting the AM is combined into one channel of third data in a sequential sending manner, and the one channel of third data is encoded, to obtain the plurality of second codewords.

Because the decoding result obtained by deleting the AM is combined into the one channel of third data in the sequential sending manner, a decoding result that is included in the third data, that is based on each channel of first data, and that is obtained by deleting the AM may appear periodically. For example, the decoding result obtained by deleting the AM includes n 257-bit code block streams, and the n 257-bit code block streams are sequentially sent, so that data that belongs to the n 257-bit code block streams and that is in the one channel of third data obtained through combination periodically appears. A sequential sending granularity is not limited in this embodiment of this application, and includes but is not limited to 5440-bit, 5140-bit, 257-bit, 66-bit, 10-bit, 2-bit, or 1-bit.

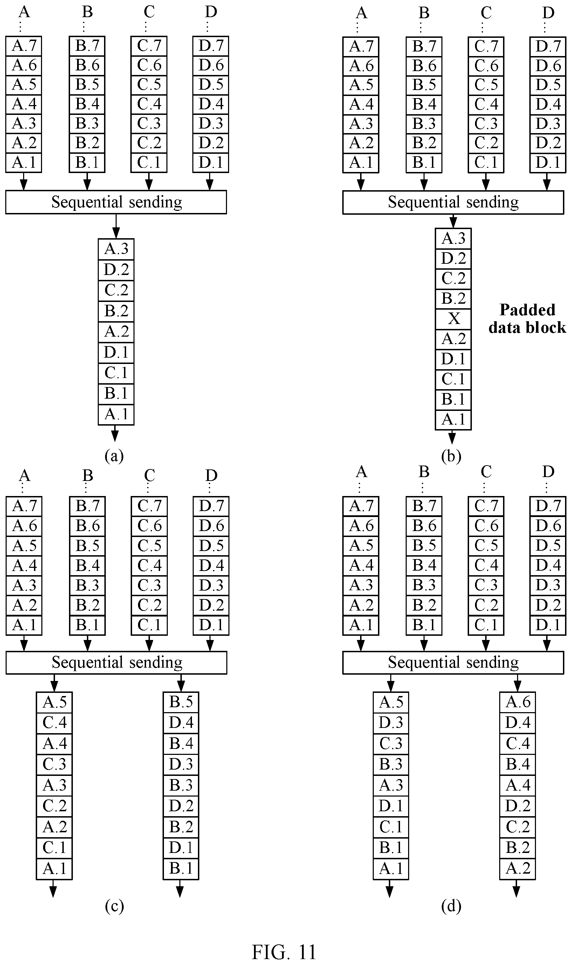

For example, for a case in which the decoding result obtained by deleting the AM includes decoding results that are obtained by deleting AMs and that correspond to the plurality of channels of first data, a decoding result that is obtained by deleting an AM and that corresponds to each channel of first data is sequentially sent, and the decoding result is combined into one channel of third data. For example, the decoding result obtained by deleting the AM includes four code block streams: a code block stream A, a code block stream B, a code block stream C, and a code block stream D. The code block stream A includes code blocks A. 1, A.2, A.3, A.4, A.5, A.6, A.7, and the like. The code block stream B includes code blocks B.1, B.2, B.3, B.4, B.5, B.6, B.7, and the like. The code block stream C includes code blocks C.1, C.2, C.3, C.4, C.5, C.6, C.7, and the like. The code block stream D includes code blocks D.1, D.2, D.3, D.4, D.5, D.6, D.7, and the like. In this case, in some embodiments, when the decoding result obtained by deleting the AM is combined into the one channel of third data in the sequential sending manner, statuses of code blocks in each code block stream included in the channel of third data are shown in (a) in FIG. 11, and a sequence of code blocks included in the third data is A. 1, B. 1, C. 1, D. 1, A.2, B.2, C.2, D.2, A.3, and the like.

In some embodiments, combining the decoding result obtained by deleting the AM into the one channel of third data in the sequential sending manner includes but is not limited to: combining the decoding result obtained by deleting the AM into one channel of third data of a reference rate in the sequential sending manner. For example, in response to that a sum of rates of the obtained first data is less than the reference rate, the decoding result obtained by deleting the AM and first reference data are combined into one channel of third data of the reference rate. An example in which the sum of rates of the obtained first data is 400 GE, and the reference rate is 800 GE is used. In this case, the decoding result obtained by deleting the AM and 400 GE first reference data are combined into one channel of 800 GE third data. The first reference data may be idle (idle) data, and may be set based on an application scenario. Content of the first reference data is not limited in this embodiment of this application. The reference rate may be set based on experience or an actual requirement. This is not limited in this embodiment of this application. A manner of combining the decoding result obtained by deleting the AM and the first reference data into the one channel of third data of the reference rate is also not limited in this embodiment of this application. For example, the decoding result obtained by deleting the AM and the first reference data are combined into the one channel of third data of the reference rate in the sequential sending manner, or the decoding result obtained by deleting the AM is combined, and combined data and the first reference data are combined into one channel of third data of the reference rate in the sequential sending manner.

In some embodiments, for the case in which the decoding result obtained by deleting the AM includes decoding results that are obtained by deleting AMs and that correspond to the plurality of channels of first data, combining the decoding result obtained by deleting the AM into the one channel of third data of the reference rate in the sequential sending manner includes: sequentially sending a decoding result that is obtained by deleting an AM and that corresponds to each channel of first data and a padded data block, and combining the decoding result and the padded data block into one channel of third data. That the decoding result obtained by deleting the AM includes the code block stream A, the code block stream B, the code block stream C, and the code block stream D is still used as an example. The padded data block may be meaningless data, for example, pseudo-random binary sequence (pseudo-random binary sequence, PRBS) data, or may be meaningful data. Content of the padded data block is not limited in this embodiment of this application, and may be flexibly set based on an application scenario. In some embodiments, when the decoding result obtained by deleting the AM and the padded data block are combined into the one channel of third data in the sequential sending manner, statuses of code blocks in each code block stream included in the channel of third data are shown in (b) in FIG. 11, and a sequence of code blocks included in the third data is A.1, B. 1, C.1, D.1, A.2, the padded data block, B.2, C.2, D.2, A.3, and the like.

In some embodiments, combining the decoding result obtained by deleting the AM into the one channel of third data in the sequential sending manner includes but is not limited to: interleaving the decoding result obtained by deleting the AM, and combining an interleaved decoding result obtained by deleting the AM into one channel of third data in the sequential sending manner. An interleaving manner of the decoding result obtained by deleting the AM is not limited in this application. For example, for a manner of combining the decoding result obtained by deleting the AM into the one channel of third data, refer to steps of data interleaving and distribution shown in FIG. 5.

For example, encoding the one channel of third data to obtain the plurality of second codewords includes but is not limited to: performing overall encoding on the one channel of third data based on the second FEC code, to obtain the plurality of second codewords; or converting the one channel of third data into at least two channels of fifth data, and separately encoding the at least two channels of fifth data based on the second FEC code, to obtain the plurality of second codewords. A rate of the fifth data is less than a rate of the third data. For example, the third data is one channel of 800 GE data, and overall encoding is performed on the third data based on the second FEC code, to obtain the plurality of second codewords. Alternatively, the third data is converted into two channels of 400 GE fifth data, and the two channels of fifth data are separately encoded based on the second FEC code, to obtain the plurality of second codewords. For example, overall encoding is used to encode to-be-encoded data as one channel of data. A manner of converting the one channel of third data into the at least two channels of fifth data is not limited in this application. For example, the one channel of third data is converted into the at least two channels of fifth data in the sequential sending manner. For steps of encoding the one channel of third data to obtain the plurality of second codewords, refer to FEC 2 (the second FEC code) encoding and processing steps shown in FIG. 5.

Overall encoding refers to combining a plurality of channels of data into one channel of data for encoding, or overall encoding is used to encode to-be-encoded data as one channel of data. Therefore, performing overall encoding on the one channel of third data based on the second FEC code refers to encoding the one channel of third data as one channel of data.

Manner 2 of obtaining the plurality of second codewords: The decoding result obtained by deleting the AM is converted into at least two channels of third data, and the at least two channels of third data are encoded, to obtain the plurality of second codewords.

For example, the rate of the third data may be a reference rate, and a quantity of channels of third data and the reference rate may be set based on experience or an actual requirement. This is not limited in this embodiment of this application. In some embodiments, the decoding result obtained by deleting the AM is converted into the at least two channels of third data in the sequential sending manner. For example, converting the decoding result obtained by deleting the AM into the at least two channels of third data includes but is not limited to: interleaving the decoding result obtained by deleting the AM, and converting the interleaved decoding result obtained by deleting the AM into the at least two channels of third data. The interleaving manner of the decoding result obtained by deleting the AM is not limited in this application. For example, for a manner of converting the decoding result obtained by deleting the AM into the at least two channels of third data, refer to steps of data interleaving and distribution shown in FIG. 6.

For example, when the sum of rates of the at least one channel of first data is less than a sum of rates of the at least two channels of third data, the decoding result obtained by deleting the AM and second reference data are j ointly converted into the at least two channels of third data of the reference rate. For example, rates of obtained four channels of first data are 400 GE, 400 GE, 400 GE, and 200 GE, and the reference rate is 800 GE. The decoding result obtained by deleting the AM and 200 GE second reference data are jointly converted into two channels of 800 GE third data. For another example, a rate of obtained one channel of first data is 1.6 TE, and the reference rate is 800 GE. The decoding result obtained by deleting the AM and 1.6 TE second reference data are jointly converted into four channels of 800 GE third data. The second reference data may be idle (idle) data, and may be set based on an application scenario. Content of the second reference data is not limited in this embodiment of this application. For example, the second reference data may include a plurality of padded data blocks. A status of a padded data block included in each of the at least two channels of third data is not limited in this embodiment of this application.

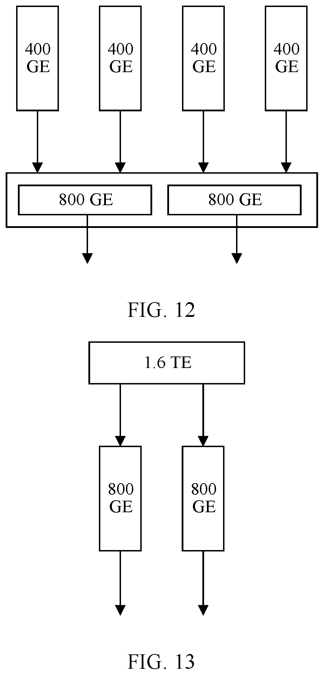

For example, when the sum of rates of the at least one channel of first data is equal to the sum of rates of the at least two channels of third data, the decoding result obtained by deleting the AM is converted into the at least two channels of third data. For example, as shown in FIG. 12, the rates of the obtained four channels of first data are all 400 GE, and the decoding result obtained by deleting the AM is converted into two channels of third data whose rate is 800 GE. For another example, as shown in FIG. 13, the rate of the obtained one channel of first data is 1.6 TE, and the decoding result obtained by deleting the AM is converted into two channels of 800 GE third data.

In some embodiments, when a quantity of channels of first data is a plurality of channels, for any one of the at least two channels of third data, the any one channel of third data may include only a decoding result that is obtained by deleting an AM and that is of a part of the first data, or include a decoding result that is obtained by deleting an AM and that is of each channel of first data. That the decoding result obtained by deleting the AM includes the code block stream A, the code block stream B, the code block stream C, and the code block stream D is still used as an example. In some embodiments, when the decoding result obtained by deleting the AM is combined into two channels of third data in the sequential sending manner, statuses of code blocks in each code block stream included in the two channels of third data are shown in (c) in FIG. 11. A sequence of code blocks included in one channel of third data is A. 1, C.1, A.2, C.2, A.3, C.3, A.4, C.4, A.5, and the like, and a sequence of code blocks included in the other channel of third data is B.1, D.1, B.2, D.2, B.3, D.3, B.4, D.4, B.5, and the like. It should be noted that (c) in FIG. 11 is merely an example in which the code block stream A and the code block stream C are combined into one channel of third data, and the code block stream B and the code block stream D are combined into one channel of third data. However, this is not used to limit an implementation. Each channel of third data may be obtained by aggregating any two code block streams.

In some other embodiments, when the decoding result obtained by deleting the AM is combined into two channels of third data in the sequential sending manner, statuses of code blocks in each code block stream included in the two channels of third data are shown in (d) in FIG. 11. A sequence of code blocks included in one channel of third data is A.1, B. 1, C.1, D.1, A.3, B.3, C.3, D.3, C.5, A.5, and the like, and a sequence of code blocks included in the other channel of third data is A.2, B.2, C.2, D.2, A.4, B.4, C.4, D.4, B.6, and the like.

In addition, in a process of obtaining the third data through combination, the manners shown in (a), (c), and (d) in FIG. 11 may alternatively include sequentially sending the padded data block and to-be-combined data. For a specific process, refer to the manner in (b) in FIG. 11. Details are not described herein again one by one. Optionally, the padded data block is not necessarily sent periodically, or may be sent at different intervals. For example, one padded data block is sent at an interval of a specific quantity of pieces of data, or a plurality of padded data blocks are inserted at an interval of a specific quantity of pieces of data.

For example, converting the decoding result obtained by deleting the AM into the at least two channels of third data includes: combining the decoding result obtained by deleting the AM into one channel of fourth data, and converting the one channel of fourth data into the at least two channels of third data. For example, all the obtained four channels of first data are 400 GE data, the decoding result obtained by deleting the AM is combined into one channel of 1.6 TE fourth data, and the one channel of 1.6 TE fourth data is converted into two channels of 800 GE third data.

When the at least two channels of third data are encoded, a manner of overall encoding or separate encoding may alternatively be used. For example, encoding the at least two channels of third data to obtain the plurality of second codewords includes: performing overall encoding on the at least two channels of third data based on the second FEC code, to obtain the plurality of second codewords; or separately encoding the at least two channels of third data based on the second FEC code, to obtain the plurality of second codewords. For steps of encoding the at least two channels of third data to obtain the plurality of second codewords, refer to FEC 2 (the second FEC code) encoding and processing steps shown in FIG. 6.

In some embodiments, separately encoding the at least two channels of third data based on the second FEC code, to obtain the plurality of second codewords includes: separately performing overall encoding on the at least two channels of third data based on the second FEC code, to obtain the plurality of second codewords; or converting each of the at least two channels of third data into at least two channels of sixth data, and separately encoding the at least two channels of sixth data based on the second FEC code, to obtain the plurality of second codewords. A rate of the sixth data is less than the rate of the third data. A principle of a process of converting each of the at least two channels of third data into the at least two channels of sixth data, and separately encoding the at least two channels of sixth data based on the second FEC code is the same as that of a related process of converting the one channel of third data into the at least two channels of fifth data, and separately encoding the at least two channels of fifth data based on the second FEC code in the foregoing manner 1 of obtaining the plurality of second codewords. Details are not described herein again. Overall encoding refers to combining a plurality of channels of data into one channel of data for encoding, or overall encoding is used to encode to-be-encoded data as one channel of data. Therefore, performing overall encoding on the at least two channels of third data based on the second FEC code refers to encoding all third data in the at least two channels of third data as one channel of data.

According to the method provided in this embodiment of this application, the third data can be encoded in different manners, to obtain the plurality of second codewords. Therefore, a transmission scenario and a transmission requirement to which the method is applicable are flexible. In addition, when the quantity of channels of third data is a plurality of channels, the quantity of channels of third data and the second FEC code used for encoding the third data may be flexibly set, to apply to different transmission scenarios and transmission requirements.

S 1-2: Obtain the at least one channel of second data based on the plurality of second codewords.

For example, obtaining the at least one channel of second data based on the plurality of second codewords includes but is not limited to: interleaving the plurality of second codewords, and obtaining the at least one channel of second data based on an interleaving result. A manner of interleaving the plurality of second codewords is not limited in this embodiment of this application. For example, at least one of codeword interleaving or inter-lane interleaving may be performed on the plurality of second codewords.

Case 2: The first module aligns the at least one channel of first data, and obtains a plurality of first codewords based on an alignment result; and obtains the at least one channel of second data based on the plurality of first codewords.

A principle of a manner in which the first module aligns the at least one channel of first data, and obtains the plurality of first codewords based on the alignment result is the same as that of a related process in the foregoing manner 1. Details are not described herein again.

For example, obtaining the at least one channel of second data based on the plurality of first codewords includes: combining the plurality of first codewords, and obtaining the at least one channel of second data based on a combination result. For example, combining the plurality of first codewords, and obtaining the at least one channel of second data based on the combination result includes but is not limited to the following two manners.

Combination manner 1: The plurality of first codewords are combined into one channel of second data in a sequential sending manner.

Because the plurality of first codewords are combined into the one channel of second data in the sequential sending manner, a plurality of first codewords that are included in the second data and that are obtained based on each channel of first data may periodically appear. A principle of a manner of combining the plurality of first codewords into the one channel of second data in the sequential sending manner is the same as that of the foregoing related process of combining the decoding result obtained by deleting the AM into the one channel of third data in the sequential sending manner. Details are not described herein again.

Combination manner 2: The plurality of first codewords are combined into at least two channels of second data.

For example, a principle of a manner of combining the plurality of first codewords into the at least two channels of second data is the same as that of the foregoing related process of converting the decoding result obtained by deleting the AM into the at least two channels of third data. Details are not described herein again.

It should be noted that, regardless of the foregoing combination manner, the second data may be interleaved data. An interleaving manner is not limited in this embodiment of this application.

Case 3: The first module encodes the at least one channel of first data based on a second FEC code, to obtain a plurality of third codewords; and the first module obtains the at least one channel of second data based on the plurality of third codewords.

For example, that the first module encodes the at least one channel of first data based on the second FEC code, to obtain the plurality of third codewords includes but is not limited to the following two manners.

Manner 1 of obtaining the plurality of third codewords: The at least one channel of first data is combined into one channel of seventh data in a sequential sending manner, and the one channel of seventh data is encoded, to obtain the plurality of third codewords.

In some embodiments, combining the at least one channel of first data into the one channel of seventh data in the sequential sending manner includes but is not limited to: The first module aligns the at least one channel of first data, obtains a plurality of first codewords based on an alignment result, and combines the plurality of first codewords into the one channel of seventh data in the sequential sending manner. A sequential sending granularity is not limited in this embodiment of this application, and includes but is not limited to 5440-bit, 5140-bit, 257-bit, 66-bit, 10-bit, 2-bit, or 1-bit. A principle of a manner in which the first module aligns the at least one channel of first data, and obtains the plurality of first codewords based on the alignment result is the same as that of a related process in the foregoing manner 1. Details are not described herein again.

In some embodiments, combining the at least one channel of first data into the one channel of seventh data in the sequential sending manner includes but is not limited to: combining the at least one channel of first data into one channel of seventh data of a reference rate in the sequential sending manner. For example, in response to that a sum of rates of the obtained first data is less than the reference rate, the at least one channel of first data and third reference data are combined into the one channel of seventh data of the reference rate. An example in which the sum of rates of the obtained first data is 400 GE, and the reference rate is 800 GE is used. In this case, the at least one channel of first data and 400 GE third reference data are combined into one channel of 800 GE seventh data. The third reference data may be idle (idle) data. Content of the third reference data is not limited in this embodiment of this application. For example, the third reference data is determined based on an application scenario. It should be noted that the reference rate may be set based on experience or an actual requirement. This is not limited in this embodiment of this application. A manner of combining the at least one channel of first data and the third reference data into the one channel of seventh data of the reference rate is not limited in this embodiment of this application. For example, the at least one channel of first data and the third reference data are combined into the one channel of seventh data of the reference rate in the sequential sending manner, or the at least one channel of first data is combined, and combined data and the third reference data are combined into one channel of seventh data of the reference rate in the sequential sending manner.

For example, encoding the one channel of seventh data, to obtain the plurality of third codewords includes but is not limited to: performing overall encoding on the one channel of seventh data based on the second FEC code, to obtain the plurality of third codewords; or converting the one channel of seventh data into at least two channels of ninth data, and separately encoding the at least two channels of ninth data based on the second FEC code, to obtain the plurality of third codewords. A rate of the ninth data is less than a rate of the seventh data. For example, the seventh data is one channel of 800 GE data, and overall encoding is performed on the seventh data based on the second FEC code, to obtain the plurality of third codewords. Alternatively, the seventh data is converted into two channels of 400 GE ninth data, and the two channels of ninth data are separately encoded based on the second FEC code, to obtain the plurality of third codewords. For example, overall encoding is used to encode to-be-encoded data as one channel of data. A manner of converting the one channel of seventh data into the at least two channels of ninth data is not limited in this application. For example, the one channel of seventh data is converted into the at least two channels of ninth data in the sequential sending manner.

Manner 2 of obtaining the plurality of third codewords: The at least one channel of first data is converted into at least two channels of seventh data, and the at least two channels of seventh data are encoded, to obtain the plurality of third codewords.

For example, a rate of the seventh data may be a reference rate, and a quantity of channels of seventh data and the reference rate may be set based on experience or an actual requirement. This is not limited in this embodiment of this application. In some embodiments, the at least one channel of first data is converted into the at least two channels of seventh data in the sequential sending manner.

For example, when the sum of rates of the at least one channel of first data is less than a sum of rates of the at least two channels of seventh data, the at least one channel of first data and fourth reference data are jointly converted into at least two channels of seventh data of the reference rate. For example, the rates of the obtained four channels of first data are 400 GE, 400 GE, 400 GE, and 200 GE, and the reference rate is 800 GE. The at least one channel of first data and 200 GE fourth reference data are jointly converted into two channels of 800 GE seventh data. For another example, the rate of the obtained one channel of first data is 1.6 TE, and the reference rate is 800 GE. The at least one channel of first data and 1.6 TE fourth reference data are jointly converted into four channels of 800 GE seventh data.

For example, when the sum of rates of the at least one channel of first data is equal to the sum of rates of the at least two channels of seventh data, the at least one channel of first data is converted into the at least two channels of seventh data.

In some embodiments, when the quantity of channels of first data is a plurality of channels, for any one of the at least two channels of seventh data, the any one channel of seventh data may include only data of a part of first data or include data of each channel of first data.

For example, converting the at least one channel of first data into the at least two channels of seventh data includes: combining the at least one channel of first data into one channel of eighth data, and converting the one channel of eighth data into the at least two channels of seventh data. For example, all the obtained four channels of first data are 400 GE data, the four channels of first data are combined into one channel of 1.6 TE eighth data, and the one channel of 1.6 TE eighth data is converted into two channels of 800 GE seventh data.

When the at least two channels of seventh data are encoded, a manner of overall encoding or separate encoding may alternatively be used. For example, encoding the at least two channels of seventh data, to obtain the plurality of third codewords includes: performing overall encoding on the at least two channels of seventh data based on the second FEC code, to obtain the plurality of third codewords; or separately encoding the at least two channels of seventh data based on the second FEC code, to obtain the plurality of third codewords.

In some embodiments, separately encoding the at least two channels of seventh data based on the second FEC code, to obtain the plurality of third codewords includes: separately performing overall encoding on the at least two channels of seventh data based on the second FEC code, to obtain the plurality of third codewords; or converting each of the at least two channels of seventh data into at least two channels of tenth data, and separately encoding the at least two channels of tenth data based on the second FEC code, to obtain the plurality of third codewords. A rate of the tenth data is less than the rate of the seventh data. A principle of a process of converting each of the at least two channels of seventh data into the at least two channels of tenth data, and separately encoding the at least two channels of tenth data based on the second FEC code is the same as that of a related process of converting the one channel of seventh data into the at least two channels of ninth data, and separately encoding the at least two channels of ninth data based on the second FEC code in the foregoing manner 1 of obtaining the plurality of third codewords. Details are not described herein again.

For example, obtaining the at least one channel of second data based on the plurality of third codewords includes but is not limited to: interleaving the plurality of third codewords, and obtaining the at least one channel of second data based on an interleaving result. A manner of interleaving the plurality of third codewords is not limited in this embodiment of this application. For example, at least one of codeword interleaving or inter-lane interleaving may be performed on the plurality of third codewords.

According to the method provided in this embodiment of this application, the seventh data can be encoded in different manners, to obtain the plurality of third codewords. Therefore, a transmission scenario and a transmission requirement to which the method is applicable are flexible. In addition, when the quantity of channels of seventh data is a plurality of channels, the quantity of channels of seventh data and the second FEC code used for encoding the seventh data may be flexibly set, to apply to different transmission scenarios and transmission requirements.

S203: The first module transmits the at least one channel of second data.

For example, that the first module transmits the at least one channel of second data includes: The first module inserts synchronization data into the at least one channel of second data, and transmits data obtained by inserting the synchronization data. The synchronization data includes but is not limited to at least one of an AM, a coherent digital signal processing (digital signal processing, DSP) frame header, a training symbol, or a pilot symbol.

In some embodiments, that the first module inserts the synchronization data into the at least one channel of second data includes: determining an AM corresponding to each channel of second data in the at least one channel of second data; and inserting the AM corresponding to each channel of second data as the synchronization data into each channel of second data. For example, the AM corresponding to each channel of second data is obtained by adjusting an AM included in corresponding first data; the AM corresponding to each channel of second data is all content of an AM included in corresponding first data; or the AM corresponding to each channel of second data is partial content of an AM included in corresponding first data. Adjusting the AM included in corresponding first data includes but is not limited to: adjusting content or a length of the AM based on different granularities.

In some embodiments, when the obtained first data is a plurality of channels of first data, an AM included in any one channel of the plurality of channels of first data may be used as the AM corresponding to any one channel of second data. It should be noted that AMs corresponding to all channels of second data may be the same or different. For example, the AM of each channel of second data may be determined based on an actual requirement.

For example, when transmitting the at least one channel of second data, the first module may further perform other processing, for example, perform processing such as multiplexing (mux), training sequence (training sequence, TS)/pilot symbol (pilot symbol) insertion, frequency adjustment, and optical modulation on the at least one channel of second data, and transmit at least one channel of processed second data. For example, modulating and outputting steps are shown in FIG. 5 and FIG. 6. Regardless of whether data transmitted by the first module is data obtained by inserting the synchronization data or data obtained through other processing, a multiplexing granularity used when the first module transmits the data includes but is not limited to an FEC codeword (codeword), 257-bit, 66-bit, 10-bit, or 1-bit. This is not limited in this embodiment of this application.

According to the method provided in this embodiment of this application, the at least one channel of first data is converted to obtain the at least one channel of second data whose sum of rates is not less than the sum of rates of the at least one channel of first data, so that data transmission can be performed at a high rate. In addition, because the first module may re-encode, by using the second FEC code, the obtained first data encoded based on the first FEC code, and the second data has a higher encoding gain, when transmission of the second data is performed on a channel on which a bit error easily occurs, effective error correction can be performed on data in which a bit error occurs, to improve data transmission quality.

Next, with reference to method procedures shown in FIG. 2, the data transmission method provided in this embodiment of this application is described by using an example in which the first module is located in the first chip and the second module is located in the second chip in the following several scenarios.

Scenario 1: The first chip and the second chip are used in the segment-by-segment FEC architecture.

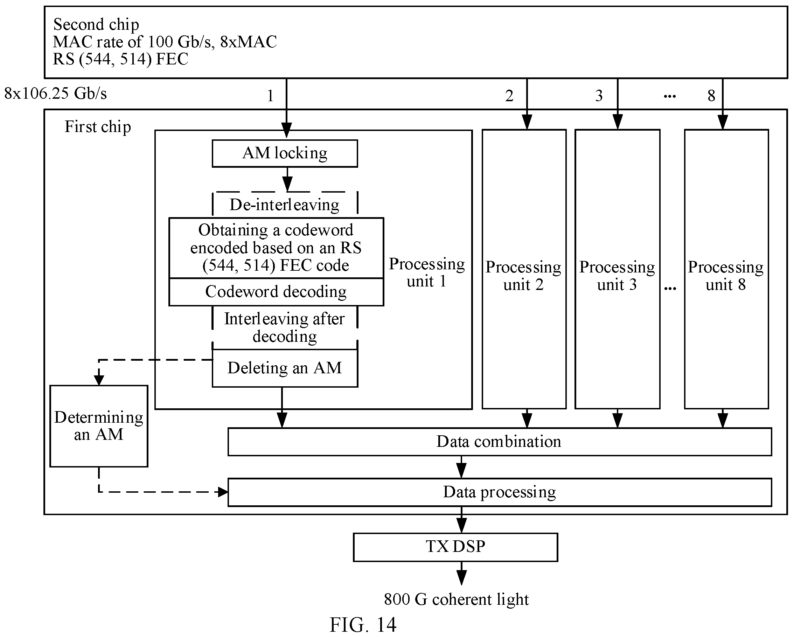

For example, Scenario 1 corresponds to Case 1 in the embodiment shown in FIG. 2. An implementation environment of this scenario may be shown in FIG. 14, and a data transmission process is as follows:

The second chip transmits eight channels of first data to the first chip through an AUI. Media access control (media access control, MAC) rates of the first data are all 100 Gb/s, and all the first data is data encoded based on an RS (544, 514) FEC code. The second chip transmits one channel of first data through one AUI, and a transmission rate is 106.25 Gb/s. The first chip includes eight processing units, and each processing unit is configured to process one channel of first data. After receiving the eight channels of first data, the first chip separately performs AM locking on each channel of first data, to align the first data and obtain a plurality of first codewords. Because the first data is the data encoded based on the RS (544, 514) FEC code, the plurality of first codewords are codewords encoded based on the RS (544, 514) FEC code. For example, when the first data is data obtained through interleaving, the first chip performs AM locking on the first data to obtain an alignment result, and then performs de-interleaving on the alignment result, to obtain the plurality of first codewords based on the de-interleaving. After obtaining the plurality of first codewords, the first chip decodes the plurality of first codewords. In a possible implementation, the first chip interleaves the decoding result, and obtains the at least one channel of second data based on the interleaved decoding result. After obtaining the decoding result, the first chip deletes the AM in the decoding result. The AM may be used to determine the AM corresponding to each of the at least one channel of second data. It should be noted that, the first chip may simultaneously perform processing on all channels of first data, or perform processing on one channel of first data, and then perform processing on another channel of first data. This is not limited in this embodiment of this application.

Further, the first chip performs data combination based on the decoding result obtained by deleting the AM. For example, the decoding result obtained by deleting the AM is combined into one channel of 800 GE third data in the sequential sending manner, or the decoding result obtained by deleting the AM is converted into at least two channels of 800 GE third data. The first chip performs data processing on the third data, for example, encodes the third data to obtain the plurality of second codewords, and obtains the at least one channel of second data based on the plurality of second codewords.

Finally, the first chip inserts an AM as synchronization data into the at least one channel of second data, and performs transmitter (transmitter, TX) DSP on data obtained by inserting the synchronization data, to obtain 800 G coherent light.

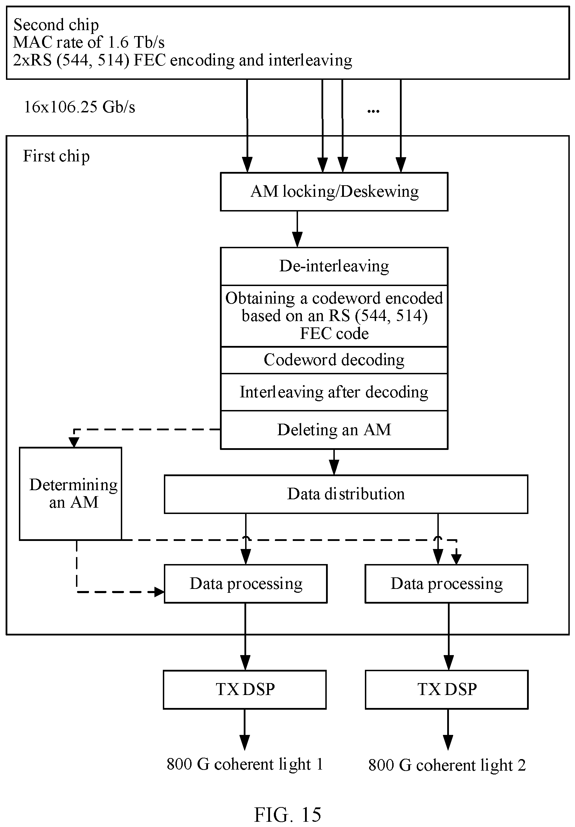

In another possible implementation, an implementation environment of the scenario is shown in FIG. 15, and a data transmission process is as follows:

The second chip transmits one channel of first data to the first chip through the AUI. A MAC rate of the first data is 1.6 Tb/s, and the first data is data encoded and interleaved by using a 2xRS (544, 514) FEC code. The second chip transmits one channel of first data through 16 AUIs, where one AUI is used for one channel of first sub-data, and a transmission rate is 106.25 Gb/s. After receiving the first data, the first chip performs AM locking/deskewing on the first data, to align the first data and obtain the plurality of first codewords. Because the first data is the data encoded based on the RS (544, 514) FEC code, the plurality of first codewords are codewords encoded based on the RS (544, 514) FEC code. For example, when the first data is data obtained through interleaving, the first chip performs AM locking on the first data to obtain an alignment result, and then performs de-interleaving on the alignment result, to obtain the plurality of first codewords based on the de-interleaving. After obtaining the plurality of first codewords, the first chip decodes the plurality of first codewords. In a possible implementation, the first chip interleaves the decoding result, and obtains the at least one channel of second data based on the interleaved decoding result. After obtaining the decoding result, the first chip deletes the AM in the decoding result. The AM may be used to determine the AM corresponding to each of the at least one channel of second data.

Further, the first chip performs data distribution on the decoding result obtained by deleting the AM. For example, the decoding result obtained by deleting the AM is converted into two channels of 800 GE third data. The first chip performs data processing on the two channels of third data, for example, encodes the two channels of third data to obtain a plurality of second codewords, and obtains two channels of second data based on the plurality of second codewords. It should be noted that processing on the two channels of third data may be the same or different.

Then, the first chip inserts an AM as synchronization data into the two channels of second data, and performs TX DSP on data obtained by inserting the synchronization data, to obtain two channels of 800 G coherent light. The processing on the two channels of second data may be the same or different. In this way, wavelengths of the two channels of 800 G coherent light obtained may be the same or different.

Scenario 2: The first chip and the second chip are used in an end-to-end FEC architecture.

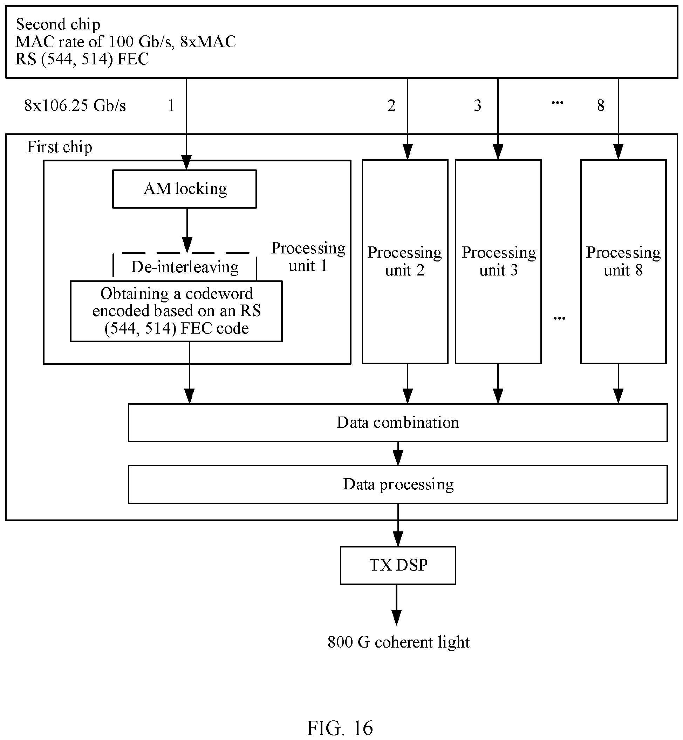

For example, Scenario 2 corresponds to Case 2 in the embodiment shown in FIG. 2. An implementation environment of this scenario is shown in FIG. 16, and a data transmission process is as follows:

The second chip transmits eight channels of first data to the first chip through an AUI. MAC rates of the first data are all 100 Gb/s, and all the first data is data encoded based on an RS (544, 514) FEC code. The second chip transmits one channel of first data through one AUI, and a transmission rate is 106.25 Gb/s. The first chip includes eight processing units, and each processing unit is configured to process one channel of first data. After receiving the eight channels of first data, the first chip separately performs AM locking on each channel of first data, to align the first data and obtain a plurality of first codewords. Because the first data is the data encoded based on the RS (544, 514) FEC code, the plurality of first codewords are codewords encoded based on the RS (544, 514) FEC code. For example, when the first data is data obtained through interleaving, the first chip performs AM locking on the first data to obtain an alignment result, and then performs de-interleaving on the alignment result, to obtain the plurality of first codewords based on the de-interleaving. The first chip may simultaneously perform processing on all channels of first data, or perform processing on one channel of first data, and then perform processing on another channel of first data. This is not limited in this embodiment of this application.

Further, the first chip performs data combination based on the plurality of first codewords. For example, the plurality of first codewords are combined into one channel of 800 GE second data in the sequential sending manner, or the plurality of first codewords are converted into at least two channels of 800 GE second data. For example, the second data may be data on which data processing is performed. For example, the second data is interleaved data. Finally, the first chip performs TX DSP on the at least one channel of second data to obtain 800 G coherent light.

Scenario 3: The first chip and the second chip are used in a concatenated FEC architecture.

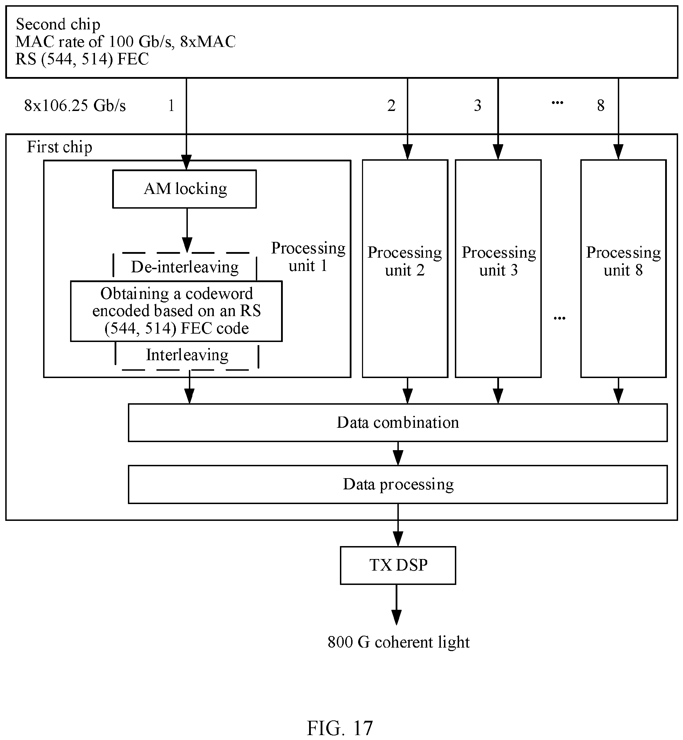

For example, Scenario 3 corresponds to Case 3 in the embodiment shown in FIG. 2. An implementation environment of this scenario is shown in FIG. 17, and a data transmission process is as follows:

The second chip transmits eight channels of first data to the first chip through an AUI. MAC rates of the first data are all 100 Gb/s, and all the first data is data encoded based on an RS (544, 514) FEC code. The second chip transmits one channel of first data through one AUI, and a transmission rate is 106.25 Gb/s. The first chip includes eight processing units, and each processing unit is configured to process one channel of first data. After receiving the eight channels of first data, the first chip separately performs AM locking on each channel of first data, to align the first data and obtain a plurality of first codewords. Because the first data is the data encoded based on the RS (544, 514) FEC code, the plurality of first codewords are codewords encoded based on the RS (544, 514) FEC code. For example, when the first data is data obtained through interleaving, the first chip performs AM locking on the first data to obtain an alignment result, and then performs de-interleaving on the alignment result, to obtain the plurality of first codewords based on the de-interleaving. For example, the first chip may further interleave the obtained plurality of first codewords to obtain a plurality of interleaved first codewords. The first chip may simultaneously perform processing on all channels of first data, or perform processing on one channel of first data, and then perform processing on another channel of first data. This is not limited in this embodiment of this application.

Further, the first chip performs data combination based on the plurality of first codewords obtained based on all the channels of first data. For example, the plurality of first codewords are combined into one channel of 800 GE seventh data, or the plurality of first codewords are converted into at least two channels of 800 GE seventh data. The first chip performs data processing on the seventh data, for example, encodes the seventh data to obtain a plurality of third codewords, and obtains at least one channel of second data based on the plurality of third codewords.

Then, the first chip performs TX DSP on the at least one channel of second data to obtain 800 G coherent light.

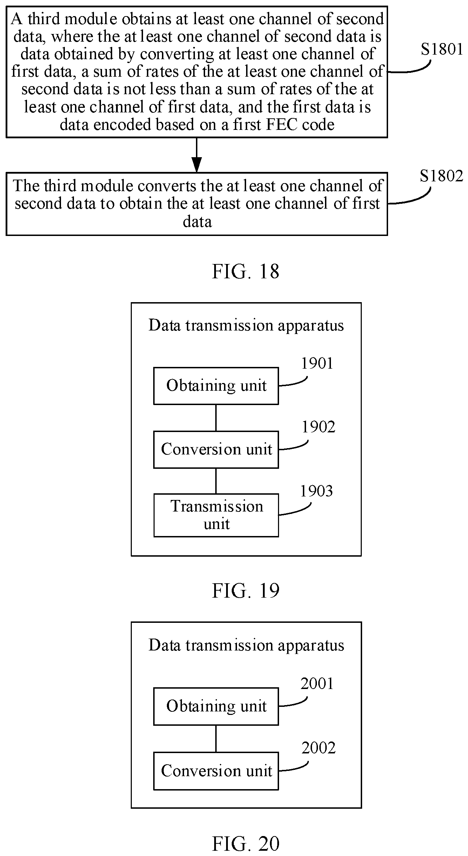

The foregoing describes the data transmission method by using the first module as an example. The following describes a process in which a third module performs data transmission after the first module transmits at least one channel of second data. As shown in FIG. 18, the data transmission method includes the following steps.

S1801: A third module obtains at least one channel of second data, where the at least one channel of second data is data obtained by converting at least one channel of first data, a sum of rates of the at least one channel of second data is not less than a sum of rates of the at least one channel of first data, and the first data is data encoded based on a first FEC code.

With reference to the implementation environment shown in FIG. 1, the third module obtains at least one channel of second data sent by a first module. With reference to the embodiment shown in FIG. 2, there are a plurality of manners in which the first module obtains the at least one channel of second data. Details are not described herein again one by one in this embodiment of this application. For details, refer to the content of the embodiment shown in FIG. 2.

S1802: The third module converts the at least one channel of second data to obtain the at least one channel of first data.

Because there are the plurality of manners in which the first module obtains the at least one channel of second data, there are also a plurality of cases of the second data. For different cases of the second data, the third module may perform processing by using different manners. For example, for a case in which the second data is data encoded based on a second FEC code, the third module decodes the second data based on the second FEC code, to obtain decoded data.

Then, the third module may further process the decoded data. A manner in which the third module processes the second data is not limited in this embodiment of this application. For example, the decoded data continues to be sent to another module. In addition, the third module may be located in a third chip, the first module is located in a first chip, and the third module receives at least one channel of second data sent by the first module through an AUI.

According to the method provided in this embodiment of this application, the at least one channel of second data is converted to obtain at least one channel of first data whose sum of rates is not greater than a sum of rates of the at least one channel of second data, so that data transmission can be performed at a high rate. In addition, because the second data may be data encoded based on the first FEC code and the second FEC code, when the second data is decoded by using the second FEC code, and transmission is performed on a channel on which a bit error easily occurs, effective error correction can be performed on data in which a bit error occurs, to improve data transmission quality.

An embodiment of this application further provides a data transmission apparatus. FIG. 19 is a schematic diagram of a structure of a data transmission apparatus according to an embodiment of this application. Based on the following plurality of units shown in FIG. 19, the data transmission apparatus shown in FIG. 19 can perform all or some operations performed by a first module. It should be understood that the apparatus may include more additional units than the units shown, or may omit some units shown in the apparatus. This is not limited in this embodiment of this application. As shown in FIG. 19, the apparatus includes:
an obtaining unit 1901, configured to obtain at least one channel of first data, where the first data is data encoded based on a first FEC code;
a conversion unit 1902, configured to convert the at least one channel of first data to obtain at least one channel of second data, where a sum of rates of the at least one channel of second data is not less than a sum of rates of the at least one channel of first data; and
a transmission unit 1903, configured to transmit the at least one channel of second data.

In a possible implementation, the conversion unit 1902 is configured to: align the at least one channel of first data, and obtain a plurality of first codewords based on an alignment result; and decode the plurality of first codewords, and obtain the at least one channel of second data based on a decoding result.

In a possible implementation, the conversion unit 1902 is configured to: encode the decoding result based on a second FEC code, to obtain a plurality of second codewords; and obtain the at least one channel of second data based on the plurality of second codewords.

In a possible implementation, the conversion unit 1902 is configured to: interleave the plurality of second codewords, and obtain the at least one channel of second data based on an interleaving result.

In a possible implementation, the first data includes an alignment marker AM, and the AM is used to align the at least one channel of first data. The conversion unit 1902 is configured to: delete the AM in the decoding result, and encode, based on the second FEC code, a decoding result obtained by deleting the AM, to obtain the plurality of second codewords.

In a possible implementation, the conversion unit 1902 is configured to: combine, in a sequential sending manner, the decoding result obtained by deleting the AM into one channel of third data, and encode the one channel of third data, to obtain the plurality of second codewords; or convert the decoding result obtained by deleting the AM into at least two channels of third data, and encode the at least two channels of third data, to obtain the plurality of second codewords.

In a possible implementation, the conversion unit 1902 is configured to: combine the decoding result obtained by deleting the AM into one channel of fourth data, and convert the one channel of fourth data into the at least two channels of third data.

In a possible implementation, the conversion unit 1902 is configured to: perform overall encoding on the one channel of third data based on the second FEC code, to obtain the plurality of second codewords; or convert the one channel of third data into at least two channels of fifth data, and separately encode the at least two channels of fifth data based on the second FEC code, to obtain the plurality of second codewords. A rate of the fifth data is less than a rate of the third data.

In a possible implementation, the conversion unit 1902 is configured to: perform overall encoding on the at least two channels of third data based on the second FEC code, to obtain the plurality of second codewords; or separately encode the at least two channels of third data based on the second FEC code, to obtain the plurality of second codewords.

In a possible implementation, the conversion unit 1902 is configured to: separately perform overall encoding on the at least two channels of third data based on the second FEC code, to obtain the plurality of second codewords; or convert each of the at least two channels of third data into at least two channels of sixth data, and separately encode the at least two channels of sixth data based on the second FEC code, to obtain the plurality of second codewords. A rate of the sixth data is less than the rate of the third data.

In a possible implementation, the conversion unit 1902 is configured to: mark an error code block in a plurality of code blocks included in the decoding result, and obtain the at least one channel of second data based on a marked decoding result.

In a possible implementation, the conversion unit 1902 is configured to: align the at least one channel of first data, and obtain a plurality of first codewords based on an alignment result; and obtain the at least one channel of second data based on the plurality of first codewords.

In a possible implementation, the conversion unit 1902 is configured to: combine the plurality of first codewords, and obtain the at least one channel of second data based on a combination result.

In a possible implementation, the conversion unit 1902 is configured to: combine the plurality of first codewords into one channel of second data in a sequential sending manner; or combine the plurality of first codewords into at least two channels of second data.

In a possible implementation, the conversion unit 1902 is configured to: de-interleave the alignment result, and obtain the plurality of first codewords based on a de-interleaving result.

In a possible implementation, the conversion unit 1902 is configured to: encode the at least one channel of first data based on a second FEC code, to obtain a plurality of third codewords; and obtain the at least one channel of second data based on the plurality of third codewords.

In a possible implementation, the conversion unit 1902 is configured to: interleave the plurality of third codewords, and obtain the at least one channel of second data based on an interleaving result.

In a possible implementation, the conversion unit 1902 is configured to: combine the at least one channel of first data into one channel of seventh data in a sequential sending manner, and encode the one channel of seventh data, to obtain the plurality of third codewords; or convert the at least one channel of first data into at least two channels of seventh data, and encode the at least two channels of seventh data, to obtain the plurality of third codewords.

In a possible implementation, the conversion unit 1902 is configured to: combine the at least one channel of first data into one channel of eighth data, and convert the one channel of eighth data into the at least two channels of seventh data.

In a possible implementation, the conversion unit 1902 is configured to: perform overall encoding on the one channel of seventh data based on the second FEC code, to obtain the plurality of third codewords; or convert the one channel of seventh data into at least two channels of ninth data, and separately encode the at least two channels of ninth data based on the second FEC code, to obtain the plurality of third codewords. A rate of the ninth data is less than a rate of the seventh data.

In a possible implementation, the conversion unit 1902 is configured to: perform overall encoding on the at least two channels of seventh data based on the second FEC code, to obtain the plurality of third codewords; or separately encode the at least two channels of seventh data based on the second FEC code, to obtain the plurality of third codewords.

In a possible implementation, the conversion unit 1902 is configured to: separately perform overall encoding on the at least two channels of seventh data based on the second FEC code, to obtain the plurality of third codewords; or convert each of the at least two channels of seventh data into at least two channels of tenth data, and separately encode the at least two channels of tenth data based on the second FEC code, to obtain the plurality of third codewords. A rate of the tenth data is less than a rate of the seventh data.

In a possible implementation, the transmission unit 1903 is configured to: insert synchronization data into the at least one channel of second data, and transmit data obtained by inserting the synchronization data.

In a possible implementation, the transmission unit 1903 is configured to: determine an AM corresponding to each channel of second data in the at least one channel of second data; and insert the AM corresponding to each channel of second data as synchronization data into each channel of second data.

In a possible implementation, the AM corresponding to each channel of second data is obtained by adjusting an AM included in corresponding first data; the AM corresponding to each channel of second data is all content of an AM included in corresponding first data; or the AM corresponding to each channel of second data is partial content of an AM included in corresponding first data.

FIG. 20 is a schematic diagram of a structure of a data transmission apparatus according to an embodiment of this application. Based on the following plurality of units shown in FIG. 20, the data transmission apparatus shown in FIG. 20 can perform all or some operations performed by a third module. It should be understood that the apparatus may include more additional units than the units shown, or may omit some units shown in the apparatus. This is not limited in this embodiment of this application. As shown in FIG. 20, the apparatus includes:
an obtaining unit 2001, configured to obtain at least one channel of second data, where the at least one channel of second data is data obtained by converting at least one channel of first data, a sum of rates of the at least one channel of second data is not less than a sum of rates of the at least one channel of first data, and the first data is data encoded based on a first forward error correction FEC code; and
a conversion unit 2002, configured to convert the at least one channel of second data to obtain the at least one channel of first data.

It should be understood that, when the apparatuses provided in FIG. 19 and FIG. 20 implement functions of the apparatuses, division into the foregoing functional modules is merely used as an example for description. In actual application, the foregoing functions may be allocated, based on requirements, to different functional units for implementation. In other words, an inner structure of a device is divided into different functional units, to implement all or some of the functions described above. In addition, the apparatuses provided in the foregoing embodiments and the method embodiments belong to a same concept. For specific implementation processes thereof, refer to the method embodiments. Details are not described herein again.

An embodiment of this application provides a data transmission device. The device includes a processor. The processor is coupled to a memory, the memory stores at least one program instruction or code, and the at least one program instruction or code is loaded and executed by the processor, to enable the data transmission device to implement the method in the foregoing method embodiment.

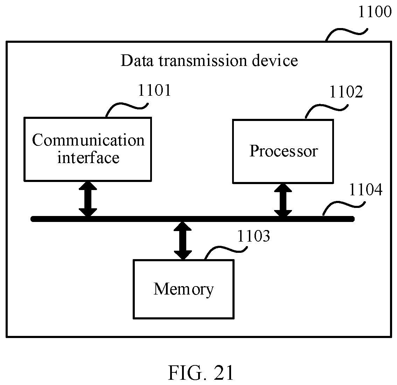

FIG. 21 is a schematic diagram of a structure of a data transmission device 1100 according to an example embodiment of this application. The data transmission device 1100 is a transmit side/receive side device. The data transmission device 1100 shown in FIG. 21 is configured to perform operations related to the data transmission method shown in FIG. 2. The data transmission device 1100 is, for example, a network device such as a switch or a router, or another device (such as a server or a PC) including a chip concatenated mode. A hardware structure of the data transmission device 1100 includes a communication interface 1101 and a processor 1102. Optionally, the communication interface 1101 and the processor 1102 are connected by using a bus 1104. The communication interface 1101 is configured to: obtain first data and transmit second data. The processor may store instructions or program code, and invoke the instructions or the program code to perform a function performed by the first module or a function performed by the third module. Optionally, the data transmission device 1100 further includes a memory 1103. The memory 1103 stores instructions or program code, and the processor 1102 is configured to invoke the instructions or the program code in the memory 1103, to enable the data transmission device 1100 to perform related processing steps of the first module in the foregoing method embodiment. In a specific embodiment, the data transmission device 1100 in this embodiment of this application may include the first module in the foregoing method embodiments. The processor 1102 in the data transmission device 1100 reads the instructions or the program code in the memory 1103, to enable the data transmission device 1100 shown in FIG. 21 to perform all or some operations performed by the first module.

In a specific embodiment, the data transmission device 1100 in this embodiment of this application includes the third module in the foregoing method embodiments. The processor 1102 in the data transmission device 1100 reads the instructions or the program code in the memory 1103, to enable the data transmission device 1100 shown in FIG. 21 to perform all or some operations performed by the third module.

For example, the processor 1102 is a general central processing unit (central processing unit, CPU), a digital signal processor (digital signal processor, DSP), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions of this application. For example, the processor 1102 includes an application-specific integrated circuit (application-specific integrated circuit, ASIC), a programmable logic device (programmable logic device, PLD) or another programmable logic device, a transistor logic device, a hardware component, or any combination thereof. The PLD is, for example, a complex programmable logic device (complex programmable logic device, CPLD), a field-programmable gate array (field-programmable gate array, FPGA), a generic array logic (generic array logic, GAL), or any combination thereof. The processor may implement or execute various logical blocks, modules, and circuits described with reference to the content disclosed in embodiments of this application. Alternatively, the processor may be a combination of processors implementing a computing function, for example, a combination including one or more microprocessors, or a combination of a DSP and a microprocessor.

Optionally, the data transmission device 1100 further includes the bus 1104. The bus 1104 is configured to transfer information between components of the data transmission device 1100. The bus 1104 may be a peripheral component interconnect (peripheral component interconnect, PCI) bus, an extended industry standard architecture (extended industry standard architecture, EISA) bus, or the like. The bus 1104 may be classified into an address bus, a data bus, a control bus, and the like. For ease of representation, only one thick line is for representing the bus in FIG. 21, but this does not mean that there is only one bus or only one type of bus. In addition to being connected by using the bus 1104, the components of the data transmission device 1100 in FIG. 21 may further be connected in another manner. A manner in which the components are connected is not limited in this embodiment of this application.

The memory 1103 is, for example, a read-only memory (read-only memory, ROM) or another type of static storage device that can store static information and instructions, or a random access memory (random access memory, RAM) or another type of dynamic storage device that can store information and instructions, or an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer, but is not limited thereto. For example, the memory 1103 exists independently, and is connected to the processor 1102 through the bus 1104. Alternatively, the memory 1103 may be integrated with the processor 1102.

The communication interface 1101 uses any apparatus such as a transceiver, and is configured to communicate with another device or a communication network. The communication network may be an Ethernet, a radio access network (RAN), a wireless local area network (wireless local area network, WLAN), or the like. The communication interface 1101 may include a wired communication interface, and may further include a wireless communication interface. Specifically, the communication interface 1101 may be an Ethernet (Ethernet) interface, a fast Ethernet (fast Ethernet, FE) interface, a gigabit Ethernet (gigabit Ethernet, GE) interface, an asynchronous transfer mode (asynchronous transfer mode, ATM) interface, a wireless local area network (wireless local area network, WLAN) interface, a cellular network communication interface, or a combination thereof. The Ethernet interface may be an optical interface, an electrical interface, or a combination thereof. In this embodiment of this application, the communication interface 1101 may be used by the data transmission device 1100 to communicate with another device.

During specific implementation, in an embodiment, the processor 1102 may include one or more CPUs. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the data transmission device 1100 may include a plurality of processors. Each of the processors may be a single-core processor (single-CPU) or may be a multi-core processor (multi-CPU). The processor herein may be one or more devices, circuits, and/or processing cores configured to process data (for example, computer program instructions).

During specific implementation, in an embodiment, the data transmission device 1100 may further include an output device and an input device. The output device communicates with the processor 1102, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector). The input device communicates with the processor 1102, and may receive an input from a user in a plurality of manners. For example, the input device may be a mouse, a keyboard, a touchscreen device, or a sensor device.

In some embodiments, the memory 1103 is configured to store program code for executing the solutions in this application, and the processor 1102 can execute the program code stored in the memory 1103. In other words, the data transmission device 1100 may implement, by using the processor 1102 and the program code in the memory 1103, the data transmission method provided in the method embodiments. The program code may include one or more software modules. Optionally, the processor 1102 may alternatively store program code or instructions for executing the solutions of this application.

In a specific embodiment, the data transmission device 1100 in this embodiment of this application may include the first module in the foregoing method embodiments. The processor 1102 in the data transmission device 1100 reads the program code in the memory 1103 or the program code or the instructions stored in the processor 1102, to enable the data transmission device 1100 shown in FIG. 21 to perform all or some operations performed by the first module.

In a specific embodiment, the data transmission device 1100 in this embodiment of this application may include the third module in the foregoing method embodiments. The processor 1102 in the data transmission device 1100 reads the program code in the memory 1103 or the program code or the instructions stored in the processor 1102, to enable the data transmission device 1100 shown in FIG. 21 to perform all or some operations performed by the third module.

The data transmission device 1100 may further correspond to the apparatuses shown in FIG. 19 and FIG. 20. Each functional unit in the apparatuses shown in FIG. 19 and FIG. 20 is implemented by using software of the data transmission device 1100. In other words, functional units included in the apparatuses shown in FIG. 19 and FIG. 20 are generated after the processor 1102 in the data transmission device 1100 reads the program code stored in the memory 1103.

The steps of the data transmission method shown in FIG. 2 to FIG. 18 are completed by an integrated logic circuit of hardware in the processor of the data transmission device 1100 or instructions in a form of software. The steps of the method disclosed with reference to embodiments of this application may be directly executed and accomplished by using a hardware processor, or may be executed and accomplished by using a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory, and completes the steps of the foregoing methods in combination with hardware of the processor. To avoid repetition, details are not described herein again.

An embodiment of this application further provides a data transmission system. The system includes a first data transmission device and a second data transmission device. The first data transmission device is configured to perform the method performed by the first module shown in FIG. 2, and the second data transmission device is configured to perform the method performed by the third module shown in FIG. 18.

For functions of the first data transmission device and the second data transmission device in the system, refer to related descriptions shown in FIG. 2 and FIG. 18. Details are not described herein again one by one.

It should be understood that the processor may be a CPU, or may be another general-purpose processor, a DSP, an ASIC, an FPGA, or another programmable logic device, a discrete gate or a transistor logic device, a discrete hardware component, or the like. The general-purpose processor may be a microprocessor, any conventional processor, or the like. It should be noted that the processor may be a processor that supports an advanced reduced instruction set computing machines (advanced RISC machines, ARM) architecture.

Further, in an optional embodiment, the memory may include a read-only memory and a random access memory, and provide instructions and data for the processor. The memory may further include a non-volatile random access memory. For example, the memory may further store information about a device type.

The memory may be a volatile memory or a non-volatile memory, or may include both a volatile memory and a non-volatile memory. The non-volatile memory may be a ROM, a programmable read-only memory (programmable ROM, PROM), an erasable programmable read-only memory (erasable PROM, EPROM), an EEPROM, or a flash memory. The volatile memory may be a RAM, and serves as an external cache. By way of example, and not description, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

A computer-readable storage medium is further provided. The storage medium stores at least one program instruction or code, and when the program instruction or code is loaded and executed by a processor, a computer is enabled to implement the data transmission method shown in FIG. 2 to FIG. 18.

This application provides a computer program. When the computer program is executed by a computer, a processor or the computer is enabled to perform corresponding steps and/or procedures in the foregoing method embodiments.

A chip is provided. The chip includes a processor, configured to: invoke, from a memory, instructions stored in the memory and run the instructions, to enable a device on which the chip is installed to perform the methods in the foregoing aspects.

Another chip is provided. The chip includes an input interface, an output interface, a processor, and a memory. The input interface, the output interface, the processor, and the memory are connected to each other through an internal connection channel. The processor is configured to execute code in the memory. When the code is executed, the processor is configured to perform the methods in the foregoing aspects.

A device is provided. The device includes the chip in any one of the foregoing solutions.

A device is provided. The device includes the first chip in any one of the foregoing solutions and/or the third chip in any one of the foregoing solutions.

In some embodiments, in FIG. 14 to FIG. 17, the second chip may be a transmit-side device, for example, a physical layer (PHY) chip in a router, a switch, or a server, and the first chip may be an interface of a receive-side device, for example, a chip in an optical module or a clock data recovery (clock data recovery, CDR)/retimer (retimer) chip. In some embodiments, the first chip may be a transmit-side device, for example, a PHY chip in a router, a switch, or a server, and the third chip may be an interface of a receive-side device, for example, a chip in an optical module or a CDR/retimer chip. The PHY chip may be a chip located on a board of a computing device. The chip may be one or any combination of a CPU, an NP, an NPU, an FPGA, a programmable logic controller (programmable logic controller, PLC), and the like.

In some embodiments, the first chip and the second chip communicate with each other through an AUI. In some embodiments, the third chip and the first chip communicate with each other through an AUI.

All or some of the embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on a computer, the procedure or functions according to this application are completely or partially generated. The computer may be a general-purpose computer, a dedicated computer, a computer network, or other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state drive)), or the like.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

A person of ordinary skill in the art may be aware that, with reference to the method steps and modules described in embodiments disclosed in this specification, the method steps and modules can be implemented by using software, hardware, firmware, or any combination thereof. To clearly describe interchangeability between the hardware and the software, the steps and compositions of embodiments have been generally described in terms of functions in the foregoing descriptions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

A person of ordinary skill in the art may understand that all or some of the steps of the foregoing embodiments may be implemented by hardware, or may be implemented by a program instructing related hardware. The program may be stored in a computer-readable storage medium. The mentioned storage medium may be a read-only memory, a magnetic disk, a compact disc, or the like.

When the software is used to implement the embodiments, all or some of the embodiments may be implemented in a form of a computer program product. The computer program product includes one or more computer program instructions. In an example, the method according to embodiments of this application may be described in the context of machine-executable instructions. For example, the machine-executable instructions are included in a program module that is in a component for execution on a real or virtual processor of a target. Generally, the program module includes a routine, a program, a library, an object, a class, a component, a data structure, and the like, and executes a specific task or implements a specific abstract data structure. In various embodiments, functions of the program modules may be combined or split between the described program modules. The machine-executable instructions for the program module may be executed locally or within a distributed device. In the distributed device, the program module may be located in both a local storage medium and a remote storage medium.

Computer program code used to implement the method in embodiments of this application may be written in one or more programming languages. The computer program code may be provided for a processor of a general-purpose computer, a dedicated computer, or another programmable data processing apparatus, so that when the program code is executed by the computer or the another programmable data processing apparatus, the function/operation specified in the flowchart and/or block diagram is implemented. The program code may be executed entirely on a computer, partly on a computer, as a standalone software package, partly on a computer and partly on a remote computer, or entirely on a remote computer or a server.

In the context of embodiments of this application, computer program code or related data may be carried in any appropriate carrier, to enable the device, the apparatus, or the processor to perform various types of processing and operations described above. Examples of the carrier include a signal, a computer-readable medium, and the like.

Examples of the signal may include an electrical signal, an optical signal, a radio signal, a voice signal, or other forms of propagated signals, such as a carrier wave and an infrared signal.

A machine-readable medium may be any tangible medium that includes or stores programs used for or related to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk drive, a RAM, a ROM, an erasable programmable read-only memory (EPROM or flash memory), an optical storage device, a magnetic storage device, or any appropriate combination thereof.

It can be clearly understood by a person skilled in the art that, for the purpose of convenient and brief description, for a detailed working process of the foregoing system, device, and module, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into modules is merely logical function division, and there may be other division modes during actual application. For example, a plurality of modules or components may be combined or may be integrated to another system, or some characteristics may be ignored or not executed. In addition, the displayed or discussed mutual couplings or direct couplings or communication connections may be indirect couplings or communication connections implemented by using some interfaces, devices, or modules, or may be electrical, mechanical, or other forms of connection.

The modules described as separate parts may or may not be physically separate, and parts displayed as modules may or may not be physical modules, to be specific, may be located at one position, or may be distributed on a plurality of network modules. Some or all of the modules may be selected based on actual requirements to implement the objectives of the solutions of embodiments of this application.

In addition, functional modules in embodiments of this application may be integrated into one processing module, or each of the modules may exist alone physically, or two or more modules may be integrated into one module. The foregoing integrated module may be implemented in a form of hardware, or may be implemented in a form of a software function module.

If the integrated module is implemented in the form of a software functional module and sold or used as an independent product, the integrated module may be stored in a computer-readable storage medium. Based on such an understanding, the technical solutions in this application essentially, or the part contributing to the conventional technology, or all or some of the technical solutions may be represented in a form of a software product. The computer software product is stored in a storage medium and includes several instructions for instructing a computer device (which may be a personal computer, a server, a network device, or the like) to perform all or some of the steps of the method described in the embodiments of this application. The foregoing storage medium includes any medium that can store program code, such as a USB flash drive, a removable hard disk drive, a ROM, a RAM, a magnetic disk, or an optical disc.

In this application, terms such as "first" and "second" are used to distinguish between same items or similar items that have basically same functions. It should be understood that there is no logical or time sequence dependency between "first", "second", and "nth", and a quantity and an execution sequence are not limited. It should also be understood that although the terms such as "first" and "second" are used in the following descriptions to describe various elements, these elements should not be limited by the terms. These terms are merely used to distinguish one element from another element. For example, a first module may be referred to as a second module, and similarly, a second module may be referred to as a first module without departing from the scope of the various described examples.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

In this application, the term "at least one" means one or more, and the term "a plurality of" means two or more. For example, a plurality of second packets mean two or more second packets. The terms "system" and "network" may be used interchangeably in this specification.

It should be understood that the terms used in the descriptions of various examples in this specification are merely intended to describe specific examples, but are not intended to constitute a limitation. The terms "one" ("a" and "an") and "the" of singular forms used in the descriptions of the various examples and the appended claims are also intended to include plural forms, unless otherwise specified in the context clearly.

It should further be understood that the term "include" (which is also referred to as "includes", "including", "comprises", and/or "comprising") used in this specification specifies presence of the stated features, integers, steps, operations, elements, and/or components, with presence or addition of one or more other features, integers, steps, operations, elements, components, and/or components thereof not excluded.

It should be further understood that the term "if" may be interpreted as a meaning of "when" ("when" or "upon"), "in response to determining", or "in response to detecting". Similarly, according to the context, the phrase "if it is determined that" or "if (a stated condition or event) is detected" may be interpreted as a meaning of "when it is determined that", "in response to determining", "when (a stated condition or event) is detected", or "in response to detecting (a stated condition or event)".

It should be understood that determining B based on A does not mean that B is determined only based on A, and B may alternatively be determined based on A and/or other information.

It is to be understood that "one embodiment", "an embodiment", and "a possible implementation" mentioned in the entire specification mean that particular features, structures, or characteristics related to the embodiment or the implementation are included in at least one embodiment of this application. Therefore, "in one embodiment", "in an embodiment", or "in a possible implementation" appearing throughout this specification does not necessarily refer to a same embodiment. In addition, these particular features, structures, or characteristics may be combined in one or more embodiments in any appropriate manner.

## Claims

1. A data transmission method, comprising:
obtaining, by a first module, at least one channel of first data, wherein the at least one channel of first data is data encoded based on a first forward error correction FEC code;
converting, by the first module, the at least one channel of first data to obtain at least one channel of second data, wherein a sum of rates of the at least one channel of second data is not less than a sum of rates of the at least one channel of first data; and
transmitting, by the first module, the at least one channel of second data.

2. The method according to claim 1, wherein the converting, by the first module, the at least one channel of first data to obtain at least one channel of second data comprises:
aligning, by the first module, the at least one channel of first data, and obtaining a plurality of first codewords based on an alignment result; and
decoding the plurality of first codewords, and obtaining the at least one channel of second data based on a decoding result.

3. The method according to claim 2, wherein the obtaining the at least one channel of second data based on a decoding result comprises:
encoding the decoding result based on a second FEC code, to obtain a plurality of second codewords; and
obtaining the at least one channel of second data based on the plurality of second codewords.

4. The method according to claim 3, wherein the obtaining the at least one channel of second data based on the plurality of second codewords comprises:
interleaving the plurality of second codewords, and obtaining the at least one channel of second data based on an interleaving result.

5. The method according to claim 3 or 4, wherein the first data comprises an alignment marker AM, and the AM is used to align the at least one channel of first data; and the encoding the decoding result based on a second FEC code, to obtain a plurality of second codewords comprises:
deleting the AM in the decoding result, and encoding, based on the second FEC code, a decoding result obtained by deleting the AM, to obtain the plurality of second codewords.

6. The method according to claim 5, wherein the encoding, based on the second FEC code, a decoding result obtained by deleting the AM, to obtain the plurality of second codewords comprises:
combining, in a sequential sending manner, the decoding result obtained by deleting the AM into one channel of third data, and encoding the one channel of third data, to obtain the plurality of second codewords; or
converting the decoding result obtained by deleting the AM into at least two channels of third data, and encoding the at least two channels of third data, to obtain the plurality of second codewords.

7. The method according to claim 6, wherein the converting the decoding result obtained by deleting the AM into at least two channels of third data comprises:
combining the decoding result obtained by deleting the AM into one channel of fourth data, and converting the one channel of fourth data into the at least two channels of third data.

8. The method according to claim 6, wherein the encoding the one channel of third data, to obtain the plurality of second codewords comprises:
performing overall encoding on the one channel of third data based on the second FEC code, to obtain the plurality of second codewords; or
converting the one channel of third data into at least two channels of fifth data, and separately encoding the at least two channels of fifth data based on the second FEC code, to obtain the plurality of second codewords, wherein a rate of the fifth data is less than a rate of the third data.

9. The method according to claim 6 or 7, wherein the encoding the at least two channels of third data, to obtain the plurality of second codewords comprises:
performing overall encoding on the at least two channels of third data based on the second FEC code, to obtain the plurality of second codewords; or
separately encoding the at least two channels of third data based on the second FEC code, to obtain the plurality of second codewords.

10. The method according to claim 9, wherein the separately encoding the at least two channels of third data based on the second FEC code, to obtain the plurality of second codewords comprises:
separately performing overall encoding on the at least two channels of third data based on the second FEC code, to obtain the plurality of second codewords; or
converting each of the at least two channels of third data into at least two channels of sixth data, and separately encoding the at least two channels of sixth data based on the second FEC code, to obtain the plurality of second codewords, wherein a rate of the sixth data is less than a rate of the third data.

11. The method according to any one of claims 2 to 10, wherein the obtaining the at least one channel of second data based on a decoding result comprises:
marking an error code block in a plurality of code blocks comprised in the decoding result, and obtaining the at least one channel of second data based on a marked decoding result.

12. The method according to claim 1, wherein the converting, by the first module, the at least one channel of first data to obtain at least one channel of second data comprises:
aligning, by the first module, the at least one channel of first data, and obtaining a plurality of first codewords based on an alignment result; and
obtaining the at least one channel of second data based on the plurality of first codewords.

13. The method according to claim 12, wherein the obtaining the at least one channel of second data based on the plurality of first codewords comprises:
combining the plurality of first codewords, and obtaining the at least one channel of second data based on a combination result.

14. The method according to claim 13, wherein the combining the plurality of first codewords, and obtaining the at least one channel of second data based on a combination result comprises:
combining the plurality of first codewords into one channel of second data in a sequential sending manner; or
combining the plurality of first codewords into at least two channels of second data.

15. The method according to any one of claims 2 to 14, wherein the at least one channel of first data is data obtained through interleaving, and the obtaining a plurality of first codewords based on an alignment result comprises:
de-interleaving the alignment result, and obtaining the plurality of first codewords based on a de-interleaving result.

16. The method according to claim 1, wherein the converting, by the first module, the at least one channel of first data to obtain at least one channel of second data comprises:
encoding, by the first module, the at least one channel of first data based on a second FEC code, to obtain a plurality of third codewords; and
obtaining, by the first module, the at least one channel of second data based on the plurality of third codewords.

17. The method according to claim 16, wherein the obtaining the at least one channel of second data based on the plurality of third codewords comprises:
interleaving the plurality of third codewords, and obtaining the at least one channel of second data based on an interleaving result.

18. The method according to claim 16 or 17, wherein the encoding, by the first module, the at least one channel of first data based on a second FEC code, to obtain a plurality of third codewords comprises:
combining the at least one channel of first data into one channel of seventh data in a sequential sending manner, and encoding the one channel of seventh data, to obtain the plurality of third codewords; or
converting the at least one channel of first data into at least two channels of seventh data, and encoding the at least two channels of seventh data, to obtain the plurality of third codewords.

19. The method according to claim 18, wherein the converting the at least one channel of first data into at least two channels of seventh data comprises:
combining the at least one channel of first data into one channel of eighth data, and converting the one channel of eighth data into the at least two channels of seventh data.

20. The method according to claim 18, wherein the encoding the one channel of seventh data, to obtain the plurality of third codewords comprises:
performing overall encoding on the one channel of seventh data based on the second FEC code, to obtain the plurality of third codewords; or
converting the one channel of seventh data into at least two channels of ninth data, and separately encoding the at least two channels of ninth data based on the second FEC code, to obtain the plurality of third codewords, wherein a rate of the ninth data is less than a rate of the seventh data.

21. The method according to claim 18 or 19, wherein the encoding the at least two channels of seventh data, to obtain the plurality of third codewords comprises:
performing overall encoding on the at least two channels of seventh data based on the second FEC code, to obtain the plurality of third codewords; or
separately encoding the at least two channels of seventh data based on the second FEC code, to obtain the plurality of third codewords.

22. The method according to claim 21, wherein the separately encoding the at least two channels of seventh data based on the second FEC code, to obtain the plurality of third codewords comprises:
separately performing overall encoding on the at least two channels of seventh data based on the second FEC code, to obtain the plurality of third codewords; or
converting each of the at least two channels of seventh data into at least two channels of tenth data, and separately encoding the at least two channels of tenth data based on the second FEC code, to obtain the plurality of third codewords, wherein a rate of the tenth data is less than a rate of the seventh data.

23. The method according to any one of claims 1 to 22, wherein the transmitting, by the first module, the at least one channel of second data comprises:
inserting, by the first module, synchronization data into the at least one channel of second data, and transmitting data obtained by inserting the synchronization data.

24. The method according to claim 23, wherein the inserting, by the first module, synchronization data into the at least one channel of second data comprises:
determining an AM corresponding to each channel of second data in the at least one channel of second data; and
inserting the AM corresponding to each channel of second data as synchronization data into each channel of second data.

25. The method according to claim 24, wherein the AM corresponding to each channel of second data is obtained by adjusting an AM comprised in corresponding first data;
the AM corresponding to each channel of second data is all content of an AM comprised in corresponding first data; or
the AM corresponding to each channel of second data is partial content of an AM comprised in corresponding first data.

26. A data transmission method, comprising:
obtaining, by a third module, at least one channel of second data, wherein the at least one channel of second data is data obtained by converting at least one channel of first data, a sum of rates of the at least one channel of second data is not less than a sum of rates of the at least one channel of first data, and the first data is data encoded based on a first forward error correction FEC code; and
converting, by the third module, the at least one channel of second data to obtain the at least one channel of first data.

27. A data transmission apparatus, wherein the apparatus is used in a first module, and the apparatus comprises:
an obtaining unit, configured to obtain at least one channel of first data, wherein the first data is data encoded based on a first forward error correction FEC code;
a conversion unit, configured to convert the at least one channel of first data to obtain at least one channel of second data, wherein a sum of rates of the at least one channel of second data is not less than a sum of rates of the at least one channel of first data; and
a transmission unit, configured to transmit the at least one channel of second data.

28. The apparatus according to claim 27, wherein the conversion unit is configured to: align the at least one channel of first data, and obtain a plurality of first codewords based on an alignment result; and decode the plurality of first codewords, and obtain the at least one channel of second data based on a decoding result.

29. The apparatus according to claim 28, wherein the conversion unit is configured to: encode the decoding result based on a second FEC code, to obtain a plurality of second codewords; and obtain the at least one channel of second data based on the plurality of second codewords.

30. The apparatus according to claim 29, wherein the conversion unit is configured to: interleave the plurality of second codewords, and obtain the at least one channel of second data based on an interleaving result.

31. The apparatus according to claim 29 or 30, wherein the first data comprises an alignment marker AM, and the AM is used to align the at least one channel of first data; and the conversion unit is configured to: delete the AM in the decoding result, and encode, based on the second FEC code, a decoding result obtained by deleting the AM, to obtain the plurality of second codewords.

32. The apparatus according to claim 31, wherein the conversion unit is configured to: combine, in a sequential sending manner, the decoding result obtained by deleting the AM into one channel of third data, and encode the one channel of third data, to obtain the plurality of second codewords; or convert the decoding result obtained by deleting the AM into at least two channels of third data, and encode the at least two channels of third data, to obtain the plurality of second codewords.

33. The apparatus according to claim 32, wherein the conversion unit is configured to:
combine the decoding result obtained by deleting the AM into one channel of fourth data, and
convert the one channel of fourth data into the at least two channels of third data.

34. The apparatus according to claim 32, wherein the conversion unit is configured to: perform overall encoding on the one channel of third data based on the second FEC code, to obtain the plurality of second codewords; or convert the one channel of third data into at least two channels of fifth data, and separately encode the at least two channels of fifth data based on the second FEC code, to obtain the plurality of second codewords, wherein a rate of the fifth data is less than a rate of the third data.

35. The apparatus according to claim 32 or 33, wherein the conversion unit is configured to:
perform overall encoding on the at least two channels of third data based on the second FEC code,
to obtain the plurality of second codewords; or separately encode the at least two channels of third data based on the second FEC code, to obtain the plurality of second codewords.

36. The apparatus according to claim 35, wherein the conversion unit is configured to: separately perform overall encoding on the at least two channels of third data based on the second FEC code, to obtain the plurality of second codewords; or convert each of the at least two channels of third data into at least two channels of sixth data, and separately encode the at least two channels of sixth data based on the second FEC code, to obtain the plurality of second codewords, wherein a rate of the sixth data is less than a rate of the third data.

37. The apparatus according to any one of claims 28 to 36, wherein the conversion unit is configured to: mark an error code block in a plurality of code blocks comprised in the decoding result, and obtain the at least one channel of second data based on a marked decoding result.

38. The apparatus according to claim 27, wherein the conversion unit is configured to: align the at least one channel of first data, and obtain a plurality of first codewords based on an alignment result; and obtain the at least one channel of second data based on the plurality of first codewords.

39. The apparatus according to claim 38, wherein the conversion unit is configured to: combine the plurality of first codewords, and obtain the at least one channel of second data based on a combination result.

40. The apparatus according to claim 39, wherein the conversion unit is configured to: combine the plurality of first codewords into one channel of second data in a sequential sending manner; or combine the plurality of first codewords into at least two channels of second data.

41. The apparatus according to any one of claims 28 to 40, wherein the conversion unit is configured to: de-interleave the alignment result, and obtain the plurality of first codewords based on a de-interleaving result.

42. The apparatus according to claim 27, wherein the conversion unit is configured to: encode the at least one channel of first data based on a second FEC code, to obtain a plurality of third codewords; and obtain the at least one channel of second data based on the plurality of third codewords.

43. The apparatus according to claim 42, wherein the conversion unit is configured to: interleave the plurality of third codewords, and obtain the at least one channel of second data based on an interleaving result.

44. The apparatus according to claim 42 or 43, wherein the conversion unit is configured to: combine the at least one channel of first data into one channel of seventh data in a sequential sending manner, and encode the one channel of seventh data, to obtain the plurality of third codewords; or convert the at least one channel of first data into at least two channels of seventh data, and encode the at least two channels of seventh data, to obtain the plurality of third codewords.

45. The apparatus according to claim 44, wherein the conversion unit is configured to: combine the at least one channel of first data into one channel of eighth data, and convert the one channel of eighth data into the at least two channels of seventh data.

46. The apparatus according to claim 44, wherein the conversion unit is configured to: perform overall encoding on the one channel of seventh data based on the second FEC code, to obtain the plurality of third codewords; or convert the one channel of seventh data into at least two channels of ninth data, and separately encode the at least two channels of ninth data based on the second FEC code, to obtain the plurality of third codewords, wherein a rate of the ninth data is less than a rate of the seventh data.

47. The apparatus according to claim 44 or 45, wherein the conversion unit is configured to: perform overall encoding on the at least two channels of seventh data based on the second FEC code, to obtain the plurality of third codewords; or separately encode the at least two channels of seventh data based on the second FEC code, to obtain the plurality of third codewords.

48. The apparatus according to claim 47, wherein the conversion unit is configured to: separately perform overall encoding on the at least two channels of seventh data based on the second FEC code, to obtain the plurality of third codewords; or convert each of the at least two channels of seventh data into at least two channels of tenth data, and separately encode the at least two channels of tenth data based on the second FEC code, to obtain the plurality of third codewords, wherein a rate of the tenth data is less than a rate of the seventh data.

49. The apparatus according to any one of claims 27 to 48, wherein the transmission unit is configured to: insert synchronization data into the at least one channel of second data, and transmit data obtained by inserting the synchronization data.

50. The apparatus according to claim 49, wherein the transmission unit is configured to: determine an AM corresponding to each channel of second data in the at least one channel of second data; and insert the AM corresponding to each channel of second data as synchronization data into each channel of second data.

51. The apparatus according to claim 50, wherein the AM corresponding to each channel of second data is obtained by adjusting an AM comprised in corresponding first data; the AM corresponding to each channel of second data is all content of an AM comprised in corresponding first data; or the AM corresponding to each channel of second data is partial content of an AM comprised in corresponding first data.

52. A data transmission apparatus, wherein the apparatus is used in a third module, and the apparatus comprises:
an obtaining unit, configured to obtain at least one channel of second data, wherein the at least one channel of second data is data obtained by converting at least one channel of first data, a sum of rates of the at least one channel of second data is not less than a sum of rates of the at least one channel of first data, and the first data is data encoded based on a first forward error correction FEC code; and
a conversion unit, configured to convert the at least one channel of second data to obtain the at least one channel of first data.

53. A data transmission device, comprising a processor, wherein the processor is coupled to a memory, the memory stores at least one program instruction or code, and the at least one program instruction or code is loaded and executed by the processor, to enable the data transmission device to implement the method according to any one of claims 1 to 26.

54. A data transmission system, comprising a first data transmission device and a second data transmission device, wherein the first data transmission device is configured to perform the method according to any one of claims 1 to 25, and the second data transmission device is configured to perform the method according to claim 26.

55. A computer-readable storage medium, wherein the computer-readable storage medium stores at least one program instruction or code, and the program instruction or the code is loaded and executed by a computer, to enable the computer to implement the method according to any one of claims 1 to 26.

56. A computer program product, wherein the computer program product comprises computer program code, and when the computer program code is run on a computer, the computer is enabled to perform the method according to any one of claims 1 to 26.
